(19) Europäisches Patentamt
European Patent Office
Office européen des brevets

(11) **EP 2 009 310 B1**

(12) **EUROPEAN PATENT SPECIFICATION**

(45) Date of publication and mention
of the grant of the patent:
**25.04.2012 Bulletin 2012/17**

(51) Int Cl.:
***F16D 43/10*** *(2006.01)*

(21) Application number: **08011740.1**

(22) Date of filing: **27.06.2008**

(54) **Clutch**

Kupplung

Embrayage

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **27.09.2007 JP 2007250601
29.06.2007 JP 2007171778**

(43) Date of publication of application:
**31.12.2008 Bulletin 2009/01**

(73) Proprietor: **Yamaha Hatsudoki Kabushiki Kaisha
Shizuoka-ken 438-8501 (JP)**

(72) Inventors:
• **Yousuke, Ishida
c/o Yamaha Hatsudoki Kabushiki Kaisha
Iwata-shi
Shizuoka-ken 438-8501 (JP)**

• **Toshinori, Inomori
c/o Yamaha Hatsudoki Kabushiki Kaisha
Iwata-shi
Shizuoka-ken 438-8501 (JP)**

(74) Representative: **Grünecker, Kinkeldey,
Stockmair & Schwanhäusser
Anwaltssozietät
Leopoldstrasse 4
80802 München (DE)**

(56) References cited:
**EP-A- 1 772 642      WO-A-2005/083284
JP-A- 2005 207 515    US-A1- 2005 133 336**

## Description

The present invention relates to a clutch according to the preamble of claim 1, whereby said clutch is in particular for a vehicle.

A clutch of the above type is known from EP 1 772 642 A1. A related centrifugal clutch is known from WO 2005/083284 A1.

Depending on the type of vehicle, there is the case that an engine brake is required to work in as low an engine speed range as possible.

For example, a method, in which a one-way clutch is used as disclosed in Japanese Unexamined Patent Publication No. 2005-207515, is that the engine brake works in as low an engine speed range as possible.

Specifically, it is disclosed in JP 2005-207515 that when a clutch outer rotates faster than a clutch inner, a one-way clutch for connecting the clutch outer and the clutch inner is provided in order to transmit a back torque to a crankshaft. According to this, it is described in said document that even after the rotational speed of the crankshaft is decreased and a centrifugal clutch is disengaged, the engine brake works effectively owing to the back torque transmitted to the crankshaft by the one-way clutch.

An objective of the present invention is to provide a clutch, having a new structure without a one-way clutch, that is not disengaged until input side rotational speed becomes relatively lower in order to comply with the requirement that the engine brake works in as low an engine speed range as possible.

According to the present invention, said objective is solved by a clutch according to claim 1, said clutch comprising: an input side clutch member rotatable around an axis line, and at least an input side clutch plate rotatable with said input side clutch member; an output side clutch member separately from the input side clutch member rotatable around said axis line, and at least an output side clutch plate rotatable with said output clutch member, said output side clutch plate facing said input side clutch plate so as to form a group of plates, and being displaceable in axial direction along said axis line; an input side transformation mechanism transforming centrifugal force into axial force along the axis line so as to bring the group of plates into engagement; and an output side transformation mechanism transforming centrifugal force into axial force along the axis line so as to bring the group of plates into engagement.

Accordingly, it is possible that the clutch is not disengaged until input side rotational speed becomes relatively lower. Moreover, a clutch having a new structure without a one-way clutch can be provided.

Preferably, at least an input side biasing member is disposed between said input side clutch member and said input side transformation mechanism, and biasing said input side transformation mechanism in a direction away from said group of plates (66); and/or at least an output side biasing member is disposed between said output side clutch member and said output side transformation mechanism, and biasing said output side transformation mechanism in a direction away from said group of plates, wherein, preferably, the overall biasing force of said output side biasing member is weaker than the overall biasing force of said input side biasing member.

Further, preferably said input side clutch member comprises a clutch housing and/or said output side clutch member comprises a clutch boss which is, preferably, disposed in said clutch housing.

Still further, preferably a clutch release mechanism is configured to forcibly release a press contact state of said group of plates by force applied externally.

Yet further still, preferably in axial direction the input side transformation mechanism and the output side transformation mechanism are arranged on the same side of the group of plates and, preferably, the input side transformation mechanism is located further away from the group of plates than the output side transformation mechanism.

Beneficially, in axial direction the input side transformation mechanism and the output side transformation mechanism are arranged on opposite sides of the group of plates. Preferably, the input side transformation mechanism comprises an input side pressure member rotatable with said input side clutch member and being displaceable in axial direction so as to press said group of plates directly or indirectly by moving towards said group of plates, thereby bringing said group of plates into a press contact state; and/or the output side transformation mechanism comprises an output side pressure member rotatable with said output side clutch member and being displaceable in axial direction so as to press said group of plates directly or indirectly by moving towards said group of plates, thereby bringing said group of plates into a press contact state.

According to a preferred embodiment, the input side transformation mechanism further comprises an input side retainer facing said input side pressure member and forming a space, whose width is narrowed as the distance from said axis line increases, together with said input side pressure member, said input side retainer being fixed in axial direction to said input side clutch member or being biased towards said group of plates; and, preferably, an input side press body is disposed in the space between said input side pressure member and said input side retainer so as to move in the direction away from said axis line, thereby pressing said input side pressure member by centrifugal force generated during rotation of the input side clutch member.

According to another preferred embodiment, the output side transformation mechanism further comprises an output side retainer facing said group of plates and forming a space, whose width is narrowed as the distance from said axis line increases, together with said output side pressure member, said output side retainer being fixed in axial direction to said output clutch member or being biased towards said group of plates; and, preferably, an output side press body is disposed in the space between said output side pressure member and said output side retainer so as to move in the direction away from said axis line thereby pressing said output side pressure member towards said group of plates by centrifugal force generated during rotation of said output side clutch member.

Preferably, the rotational speed of said output side clutch member at which said output side press body starts moving in centrifugal direction is lower than that of said input side clutch member at which said input side press body starts moving in centrifugal direction. Further, preferably said input side pressure member and said output side pressure member are arranged to press said group of plates towards each other from the same direction.

Still further, preferably said input side pressure member and said output side pressure member are arranged to press said group of plates towards each other from opposite directions in axial direction.

Yet further still, preferably said input side pressure member is configured to press said group of plates indirectly by pressing said output side retainer directly or indirectly and biasing said output side retainer towards said group of plates.

Beneficially, in axial direction said input side press body is located further away from said group of plates than said output side press body; and/or in centrifugal direction said input side press body is located further away from said axis line than said output side press body.

There is also provided a vehicle, in particular straddle-type vehicle such as a motorcycle, comprising a clutch according to one of the above embodiments.

In the following, the present invention is explained in greater detail with respect to several embodiments thereof in conjunction with the accompanying drawings, wherein:

FIG.1 is a cross-sectional view of a clutch according to a first embodiment;

FIG.2 is a schematic view illustrating a power unit using the clutch of FIG.1;

FIG.3 is a left side view of the motorcycle using the power unit of FIG.2;

FIG.4 is a perspective view of the clutch housing viewed obliquely from the upper side;

FIG.5 is a plan view of a spring stopper;

FIG.6 is a plan view of a circlip;

FIG.7 is a cross-sectional view of a push rod driving mechanism;

FIG.8 is a cross-sectional view of the clutch with being engaged, a main shaft rotating at relatively high speed;

FIG.9 is a cross-sectional view of the clutch at the moment that the rotational speed of a main shaft has just reached relatively high with the rotational speed of a crankshaft at relatively low;

FIG.10 is a cross-sectional view showing the state that clutch is disengaged forcibly by a clutch release mechanism;

FIG.11 is a cross-sectional view of a centrifugal clutch according to modified embodiment 1;

FIG.12 is a cross-sectional view of a centrifugal clutch according to modified embodiment 2;

FIG.13 is a plan view of a belleville spring according to modified embodiment 2;

FIG.14 is a plane view of a plate according to modified embodiment 2;

FIG.15 is a plane view of roller retainer according to modified embodiment 2;

FIG.16 is a cross-sectional view of a centrifugal clutch according to modified embodiment 3, and

FIG.17: a schematic cross-sectional view of a centrifugal clutch according to modified embodiment 4.

Among others, the following reference signs are used in the figures:

1: motorcycle (vehicle)
2: clutch
40a: input side press body
40b: output side press body
41: input side roller weight (input side weight)
42: output side roller weight (output side weight)
44: input side clutch member
46: clutch housing
47: output side clutch member
48: clutch boss
64: friction plate
65: clutch plate
66: a group of plates
69: roller retainer (output side pressure member)
70: space
71: output side off spring
72: output side retainer
77: pressure plate (input side pressure member)

78: roller retainer (input side retainer)

79: input side off spring

82: space

86: clutch release mechanism

AX: axial line

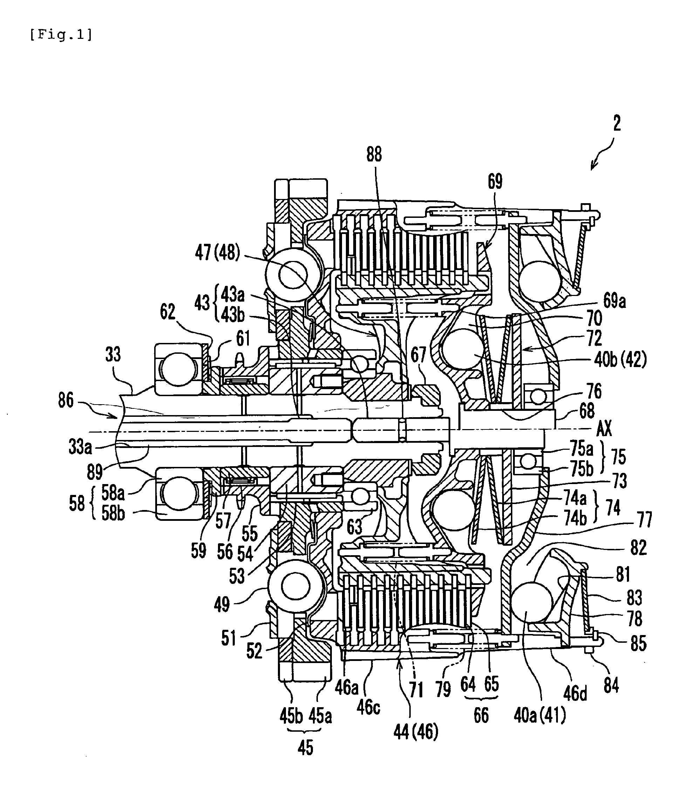

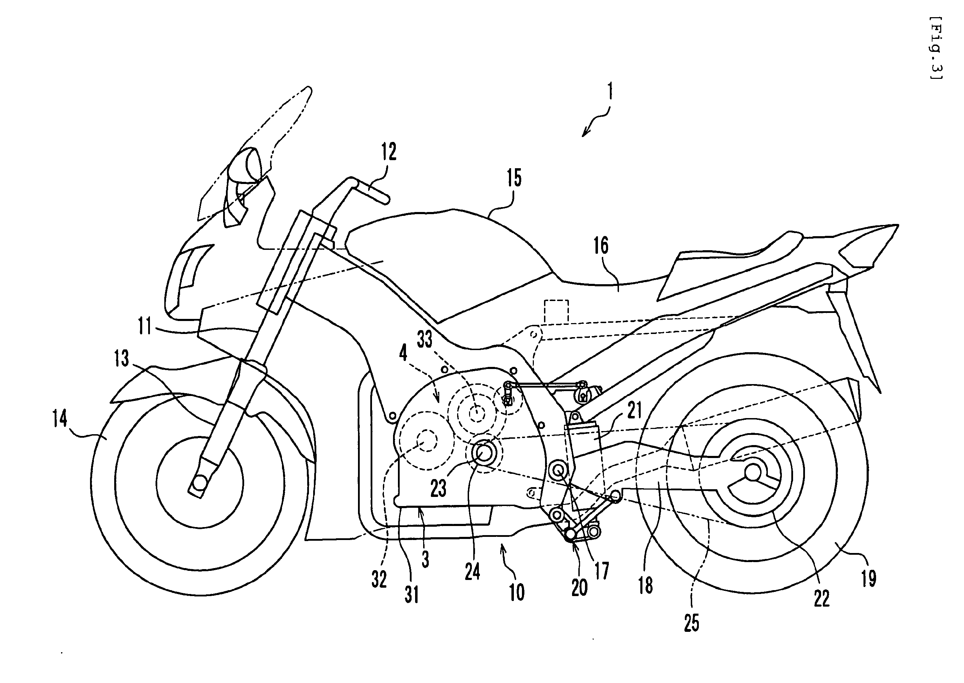

Below, a clutch and a vehicle having the clutch according to a first embodiment will be described with reference to a clutch 2 shown in FIG.1 and a motorcycle 1 shown in FIG.3. However, the motorcycle 1 and the clutch 2 are just examples of preferred embodiments. The present teaching is not limited to the motorcycle 1 and the clutch 2. The vehicle may be a straddle-type vehicle, for example, an off-road motorcycle, a scooter or a moped, or an ATV (All Terrain Vehicle), or the like. Also, the vehicle may be a vehicle other than a straddle-type vehicle, such as a four wheel vehicle. Here, the "motorcycle" in the present specification means not only so-called motorcycle in a narrow sense but also a motorcycle in a broad sense including an off-road vehicle, a scooter and a moped, and the like.

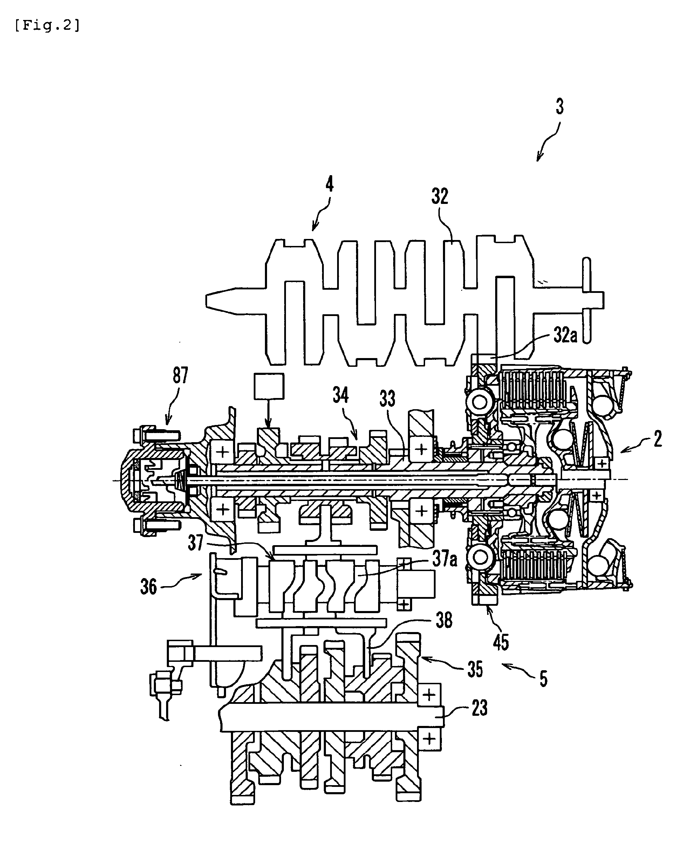

It is to be noted that, in the following description, forward, backward, right, and left directions are defined from the perspective of a rider sitting on a seat 16 shown in FIG. 3. Also, in FIG.1, the upper half portion relative to the axis line AX and the lower half portion relative to the axis line AX illustrate the clutch 2 in different states. Specifically, the upper half portion relative to the axis line AX illustrates the state that a group of plates 66 is not in a press contact state and the lower half portion relative to the axis line AX illustrates the state that the group of plates 66 is in a press contact state. For convenience of describing, only a portion of a power unit 3 is illustrated in FIG.2.

FIG.1 is a cross-sectional view of the clutch 2 according to this embodiment. FIG.2 is a schematic view illustrating the power unit 3 using the clutch 2. FIG.3. is a left side view of the motorcycle 1 having the power unit 3. At first, referring primarily to FIG. 3, outline configuration of the motorcycle 1 is described.

As shown in FIG.3, the motorcycle 1 includes a vehicle body frame 10. The vehicle body frame 10 includes a head pipe 11. In the upper side of head pipe 11, a handle 12 is attached. On the other hand, in the lower side of head pipe 11, a front wheel 14 is attached rotatably through a front fork 13.

A fuel tank 15 is attached to the vehicle body frame 10. The seat 16 is disposed in approximately central portion in the forward and backward direction of vehicle body.

The power unit 3 is suspended to the vehicle body frame 10. A pivot shaft 17 is provided on the latter half of the vehicle body frame 10. A rear arm 18 is swingably supported to the pivot shaft 17. Also, the rear arm 18 is supported through a linkage 20 and a rear cushion unit 21 to the vehicle body frame 10.

A rear wheel 19 is rotatably attached to rear end portion of the rear arm 18. A driven sprocket 22 is provided on the rear wheel 19. On the other hand, a drive sprocket 24 is provided on a drive shaft 23 of the power unit 3. A chain 25 is wound around the drive sprocket 24 and the driven sprocket 22 as a driving force transmission mechanism. By the chain 25, power of the power unit 3 is transmitted to the rear wheel 19. The rear wheel 19 is rotated by this.

In the present embodiment, the driving force transmission mechanism that transmits the power from the power unit 3 to the rear wheel 19 is not limited to the chain 25. The driving force transmission mechanism may be, for example, such as a drive shaft and a belt.

Next, referring primarily to FIG. 2, the configuration of the power unit 3 will be described in detail. As shown in FIG. 2, the power unit 3 includes the engine 4, a shifting mechanism 5 and the clutch 2. In the present teaching, the type of the engine is not limited in particular. In the present embodiment, the engine 4 is described exemplifying a water cooling, 4-cycle, parallel, 4-cylinder type engine.

The engine 4 is disposed with a cylinder axis thereof (not shown) extending rather obliquely and upwardly toward the forward part of the vehicle body. The engine 4 includes a crankcase 31 and a crankshaft 32 shown in FIG.3. The crankshaft 32 is housed in the crankcase 31. The crankshaft 32 is disposed so as to extend in the widthwise direction of the vehicle.

As shown in FIG. 2, the crankshaft 32 is connected to the shifting mechanism 5 through the clutch 2. The shifting mechanism 5 includes a main shaft 33, the drive shaft 23 and a gear selection mechanism 36. The main shaft 33 is connected to the crankshaft 32 through the clutch 2. The main shaft 33 and the drive shaft 23 each are disposed approximately parallel to the crankshaft 32.

A multi-stage shift gear 34 is mounted on the main shaft 33. On the other hand, a plurality of shift gears 35 corresponding to the multi-stage shift gear 34 is mounted on the drive shaft 23. The plurality of shift gears 34 and the plurality of shift gears 35 are engaged to each other with only the selected pairs of gears. At least one of shift gears 34 except the selected shift gear 34 among the plurality of shift gears 34 or the shift gears 35 except the selected shift gear 35 among the plurality of shift gears 35 is rotatable with respect to the main shaft 33 or the drive shaft 23. In other words, at least either of shift gears 34 which are not selected or the shift gears 35 which are not selected idle with respect to the main shaft 33 or the drive shaft 23. That is, the rotation transmission between the main shaft 33 and the drive shaft 23 is only carried out through the selected shift gear 34 and the selected shift gear 35 which are engaged to each other.

Selection of shift gear 34 and 35 is done with the gear selection mechanism 36. Specifically, selection of shift gear 34 and 35 is done with a shift cam 37 of the gear selection mechanism 36. A plurality of cam grooves 37a are formed on a surface of outer circumference of the shift cam 37. Shift forks 38 are mounted to each cam groove 37a. Each shift fork 38 is engaged to the prescribed shift gear 34 on the main shaft 33 and the prescribed shift gear 35 on the drive shaft 23 respectively. Rotation of the shift cam 37 allows each of the plurality of shift forks 38 to be guided into cam groove 37a and moved in the axial direction of the main shaft 33. Thus, gears engaged to each other among shift gears 34 and 35 are selected. Specifically, among the plurality of shift gears 34 and 35, only a pair of gears on the position corresponding to rotational angle of the shift cam 37 become locked to the main shaft 33 and the drive shaft 23 respectively with spline mechanism. Thus, the position of gear shifting is determined and transmitting of rotation, through shifting gear 34 and 35, are done at a predetermined transmission ratio between the main shaft 33 and the drive shaft 23. As a result, the power is transmitted to the rear wheel 19 through the chain 25 shown in FIG. 3, and the rear wheel 19 is rotated.

The gear selection mechanism 36 is operated by a shift pedal (not shown).

Next, referring primarily to FIG.1, the configuration of the clutch 2 will be described in detail. The clutch 2 is wet-type multi-plate friction clutch. The clutch 2 is the centrifugal clutch that can be also operated by a rider.

The clutch 2 includes an input side clutch member 44. The input side clutch member 44 rotates around the axis line AX of the main shaft 33. In this embodiment, the input side clutch member 44 is constituted by a clutch housing 46. The clutch housing 46 is penetrated by the main shaft 33. The clutch housing 46 has the same axis line AX as the main shaft 33 does.

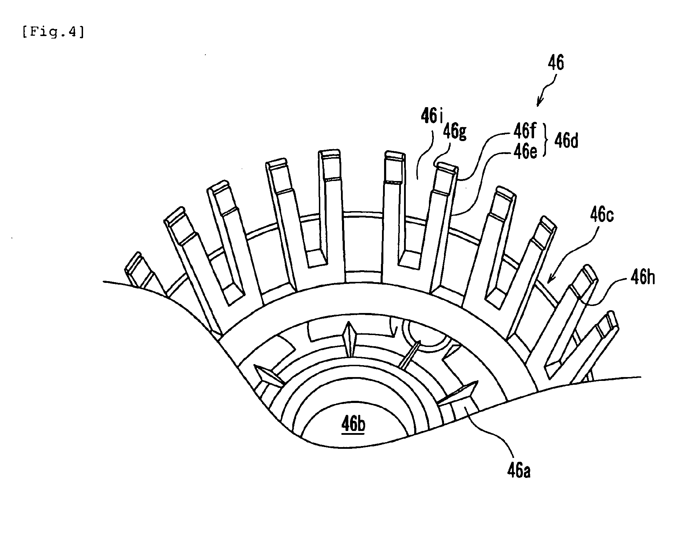

FIG.4 is a perspective view of the clutch housing 46 viewed from the obliquely upper side. As shown in FIG.4, the clutch housing 46 includes the housing body 46c. The housing body 46c is formed in the cylindrical shape of which one end is closed by a bottom portion 46a. In the bottom portion 46a, an insertion hole 46b, into which the main shaft 33 is inserted, is formed. Multiple pairs of the arms 46d are provided in the housing body 46c. Each of the arms 46d is formed so as to project radially inwardly from the inner peripheral surface of the housing body 46c. Each of the arms 46d extends outwardly from the bottom portion 46a in the widthwise direction of the vehicle. The arm 46d includes an inner portion 46e which is located relatively inwardly in the widthwise direction of the vehicle, and an outer portion 46f which is located relatively outwardly in the widthwise direction of the vehicle. The thickness of the inner portion 46e in the radial direction is thicker than that of the outer portion 46f. Because of this, an end face 46h is formed at the border between the inner portion 46e and the outer portion 46f. Also, in the tip portion of the outer portion 46f, linear grooves 46g extending in the circumferential direction are formed.

As shown in FIG. 1, a scissors gear 45 is attached to the clutch housing 46. Specifically, the clutch housing 46 is fixed non-rotatably to the gear 45a which will be described below. The axis line of the scissors gear 45 is common with that of the clutch housing 46. As shown in FIG. 2, the scissors gear 45 engages with gear 32a of the crankshaft 32. Because of this, with the rotation of the crankshaft 32, the scissors gear 45 and the clutch housing 46 are rotated integrally.

Specifically, as shown in FIG. 1, the scissors gear 45 includes two gears 45a and 45b, a spring 49 and two plates 51 and 52. The gear 45a and the gear 45b are located between these two plates 51 and 52. The two plates 51 and 52 are fixed to each other in the axial direction of the main shaft 33 by the fastening means such as rivets or screws. Hereby, the two gears 45a and 45b are fixed substantially to each other in axial direction of the main shaft 33. On the other hand, the gear 45a and the gear 45b are mutually rotatable to the direction of rotation.

The number of teeth of the gear 45a and the gear 45b are mutually equal. The gear 45a and the gear 45b are disposed so that the teeth of the gear 45a and the teeth of the gear 45b are located alternately in the circumferential direction. The spring 49 is provided between the gear 45a and the gear 45b. Because of this, torsional torque is applied to the gear 45a and the gear 45b by the spring 49. Hereby, the fluctuation torque of the engine 4 is absorbed.

Between the scissors gear 45 and the main shaft 33, a needle bearing 53 and a spacer 54, that is non-rotatably fixed to the main shaft 33, are disposed. By the needle bearing 53, the scissors gear 45 is rotatable to the main shaft 33. In other words, the rotation of the scissors gear 45 is arranged not to be directly transmitted to the main shaft 33.

A sprocket 55 is in contact with an inside end face in the widthwise direction of the vehicle of the scissors gear 45. This sprocket 55 is for driving a device such as an oil pump (not shown). The main shaft 33 is inserted into the sprocket 55. The sprocket 55 has the same axis line AX as the main shaft 33. A bearing 56 and a collar 57 are disposed between the sprocket 55 and the main shaft 33. The collar 57 is fixed non-rotatably to the main shaft 33. The bearing 56 is disposed between the collar 57 and the sprocket 55. Because of this, the sprocket 55 is rotatable to the main shaft 33. Therefore, the sprocket 55 rotates with the scissors gear 45 independently from the main shaft 33. As a result, the oil pump or the like connected to the sprocket 55 are driven by the means for transferring power, such as a belt and a chain.

A spacer 59 and a bearing 58 are disposed farther inwardly than the collar 57 in the widthwise direction of the vehicle. The spacer 59 is in contact with the collar 57, and is not in contact with the sprocket 55. And the spacer 59 is in contact with an inner ring 58a of the bearing 58, and is not contact with an outer ring 58b of the bearing 58.

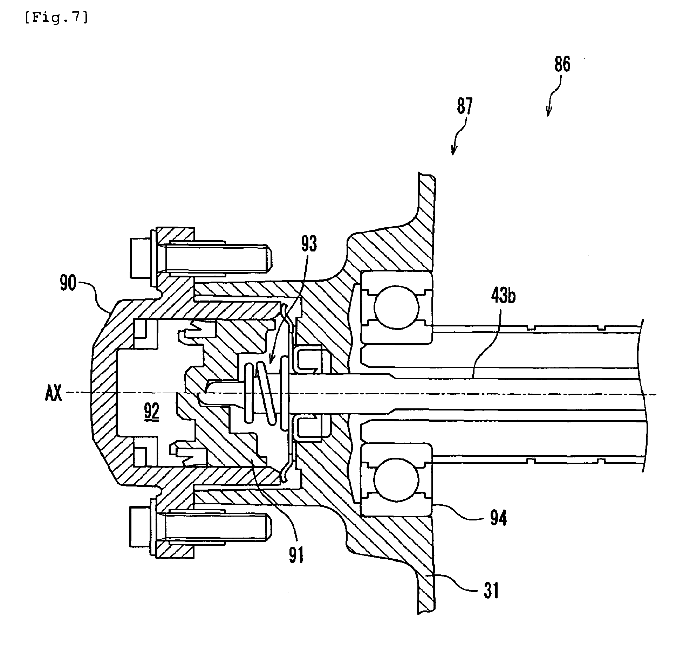

The outer ring 58b of the bearing 58 is fixed to the crankcase 31. In other words, the right side edge of the main shaft 33 is rotatably supported to the crankcase 31 by the bearing 58. On the other hand, as shown in FIG. 7, the left side edge of the main shaft 33 is rotatably supported to the crankcase 31 by a bearing 94.

The bearing 58 is non-displaceably mounted to the main shaft 33 in the axial direction of the axis line AX of the main shaft 33. On the other hand, a thrust bearing 63 is disposed between a clutch boss 48 and the scissors gear 45. The scissors gear 45, the needle bearing 53, the spacer 54, the sprocket 55, the bearing 56, the collar 57 and the spacer 59 are fixed by the bearing 58 and the thrust bearing 63 in the axial direction of axis line AX of the main shaft 33.

A belleville spring 61 and a washer 62 are disposed between the spacer 59 and the bearing 58. The washer 62 is in contact with only the outer ring 58b in the bearing 58. The washer 62 is biased by the belleville spring 61 inwardly in the axial direction of the axis line AX of the main shaft 33. In other words, the washer 62 is biased by the belleville spring 61 toward the side of the outer ring 58b of the bearing 58. Because of this, when the main shaft 33 rotates, sliding resistance is generated at least either between the belleville spring 61 and the washer 62 or between the washer 62 and the outer ring 58b. This sliding resistance results in, for example, the resistance against rotation of the main shaft 33 when the clutch 2 is disengaged. Because of this, for example, when the clutch 2 is disengaged, the rotation of the main shaft 33 is relatively early settled.

A plurality of friction plates 64 as the input side clutch discs are disposed within the clutch housing 46. Each of the friction plates 64 is fixed to the clutch housing 46 in relation to the rotational direction of the main shaft 33. Because of this, the plurality of friction plates 64 rotates with the clutch housing 46. Each of the friction plates 64 is displaceable in the axial direction of axis line AX of the main shaft 33. Because of this, the distance between the mutually adjacent friction plates 64 is variable.

The plurality of friction plates 64 is arranged in the axial direction of axis line AX of the main shaft 33. Clutch plates 65 as output side clutch plates each are arranged between the mutually adjacent friction plates 64. The clutch plate 65 faces the adjacent friction plate 64. Each of the clutch plates 65 is fixed to the clutch boss 48 in the axial direction of axis line AX of the main shaft 33. Because of this, the plurality of clutch plates 65 rotates with the clutch boss 48. Each of the clutch plates 65 is displaceable in the axial direction of axis line AX of the main shaft 33. Because of this, the distance between clutch plates 65, which are adjacent to each other, is variable.

In this embodiment, the group of plates 66 is constituted by the plurality of the friction plate 64 and the plurality of clutch plates 65.

For smooth change in load when the clutch 2 is engaged, a judder spring may be attached to the group of plates 66. Specifically, for example, the judder spring is disposed between the clutch plate 65 and the friction plate 64, and the clutch plate 65 and the friction plate 64 may be biased so as to be away from each other.

In this embodiment, the clutch boss 48 constitutes an output side clutch member 47. The clutch boss 48 is non-rotatably fixed to the main shaft 33 by a nut 67. In other words, the clutch boss 48 rotates around the axis line AX with the main shaft 33.

A shaft 68 is disposed outwardly relative to the main shaft 33 in the widthwise direction of the vehicle. The shaft 68 is press-fitted between the main shaft 33 and a pressure plate 77. The shaft 68 rotates with the main shaft 33. The shaft 68 is displaceable in the axial direction of axis line AX of the main shaft 33. A roller retainer 69 is mounted on the shaft 68 as an output side pressure member. The roller retainer 69 is non-rotatable to the shaft 68. In other words, the roller retainer 69 rotates with the shaft 68. On the other hand, in relation to an axial direction of the shaft 68, the roller retainer 69 is displaceable to the shaft 68.

The roller retainer 69 extends from the shaft 68 outwardly in the radial direction. The outside edge of the roller retainer 69 in the radial direction faces the group of plates 66 in the axial direction of axis line AX of the main shaft 33. When the roller retainer 69 is displaced, with the shaft 68, inwardly in the widthwise direction of the vehicle, the distance between the roller retainer 69 and the bottom portion 46a of the clutch housing 46 is shortened. Thus, the group of plates 66 is pressed by the roller retainer 69 directly. As a result, the group of plates 66 is brought into a press contact state. Specifically, the friction plate 64 and the clutch plate 65 are pressed to be in contact with each other. Hereby, a frictional force, in relation to the rotational direction, is generated between the friction plate 64 and the clutch plate 65. As a result, the clutch boss 48 rotates with the clutch housing 46.

On the other hand, when the roller retainer 69 is displaced, with the shaft 68, outwardly in the widthwise direction of the vehicle, the distance between the roller retainer 69 and the bottom portion 46a of the clutch housing 46 is lengthened. Because of this, the press contact state of the group of plates 66 is released. Therefore, a frictional force, in relation to the rotational direction, between the friction plate 64 and the clutch plate 65 becomes relatively small. As a result, a rotation of the clutch housing 46 is not be transmitted to the clutch boss 48.

Thus, in this embodiment, the roller retainer 69 is displaced inwardly and outwardly in the widthwise direction of the vehicle, and thereby the intermittence of the clutch 2 is carried out.

A plurality of output side off springs 71 as output side biasing members are disposed at an equal interval along a circumferential direction between the clutch boss 48 and the roller retainer 69. The roller retainer 69 is biased by the plurality of output side off springs 71 in a direction so as to be away from the group of plates 66. Hereby, in the state that a biasing force biased inwardly in the widthwise direction of the vehicle is not applied to the roller retainer 69, the roller retainer 69 is relatively apart from the bottom portion 46a of the clutch housing 46. Therefore, the group of plates 66 is in a non-press contact state. For example, the output side off springs 71 can be constituted by compression coil springs.

The stronger the elastic force of the output side off spring 71 is, the harder the clutch 2 is to be engaged and the easier the clutch 2 is to be disengaged. On the other hand, the weaker the elastic force of the output side off spring 71 is, the easier the clutch 2 is to be engaged and harder the clutch 2 is to be disengaged. Therefore, the timing of the intermittence of the clutch 2 can be controlled by adjusting the elastic force of the output side off spring 71.

A plurality of cam surfaces 69a is formed on the opposite surface of the roller retainer 69 relative to the group of plates 66. The plurality of cam surfaces 69a are located farther inwardly relative to the group of plates 66 in a radial direction. A plurality of the cam surfaces 69a is disposed radially from the axis line AX of the main shaft 33. Each of the cam surfaces 69a extends outwardly in widthwise direction of the vehicle as it goes outwardly in the radial direction.

An output side retainer 72 is attached to the shaft 68. The output side retainer 72 is attached to the shaft 68 non-rotatably and non-displaceably in the axial direction of axis line AX. The output side retainer 72 faces the opposite surface of the roller retainer 69 relative to the group of plates 66 . In other words, the output side retainer 72 faces the cam surface 69a. The output side retainer 72 and the cam surface 69a of the roller retainer 69 form a space 70 of which width becomes narrower as it is far from the axis line AX.

Specifically, the output side retainer 72 is provided with a spring stopper plate 73 and a spring 74. The spring stopper plate 73 is fixed to the shaft 68.

The spring 74, in particular, is constituted by two belleville springs 74a and 74b in the shape of orbicular zones. The belleville spring 74a extends outwardly in the widthwise direction of the vehicle and outwardly in the radial direction. The outer end of the belleville spring 74a in the radial direction is blocked by the spring stopper plate 73. The inner end of the belleville spring 74b is in contact with the inner end of the belleville spring 74a. The belleville spring 74b extends inwardly in the widthwise direction of the vehicle and outwardly in the radial direction. The above space 70 is formed by the belleville spring 74b and the cam surface 69a. A collar washer 76 is disposed between the spring 74 and the shaft 68. Direct collision between the shaft 68 and the spring 74 is suppressed by the collar washer 76.

An output side press body 40b is disposed in the space 70. The output side press body 40b is constituted by a plurality of output side roller weights 42. While the output side roller weight 42 turns with the rotation of the shaft 68, pressing said the roller retainer 69 to the side of the group of plates 66 by the centrifugal force due to turning, the output side roller weight 42 moves in the direction to be away from the axis line AX with pressing said the spring 74 outwardly in the widthwise direction of the vehicle. Thus, the roller retainer 69 moves to the side of the group of plates 66, and the group of plates 66 is brought into a press contact state.

The shape of the output side roller weight 42 is not particularly limited as long as the shape is suitable for turning with the rotation of the shaft 68 and being displaceable inwardly and outwardly in the radial direction. Specifically in this embodiment, the output side roller weight 42 is formed in approximately cylinder shape.

More specifically, the output side roller weight 42, in relation to the axis direction thereof, is divided into the central portion and the both-sides portions. The both-sides portions are non-rotatably to each other. On the other hand, the central portion is rotatable to both side portions. The cam surface 69a is formed to be in contact with only the central portion. In other words, only the central portion that is in contact with the cam surface 69a can rotate with respect to other portions. Hereby, sliding friction between the cam surface 69a and the output side roller weight 42 can be reduced. As a result, abrasion of the output side roller weight 42 can be suppressed.

According to the above, the output side roller weight 42 representing an output side press body 40b, the output side roller retainer 69 and the output side retainer 72 form an output side transformation mechanism 40b, 69, 72 configured to transform a centrifugal force acting on the output side press body 40b into an axial force along the axis line AX so as to bring the group of plates into engagement.

The pressure plate 77, as the input side pressure member, is attached non-rotatably to an outer ring 75b of a bearing 75. The outer ends of the pressure plate 77 in the radial direction engage with a plurality of arms 46d shown in FIG. 4. By this, the pressure plate 77 becomes non-rotatable to the clutch housing 46. In other words, the pressure plate 77 rotates with the clutch housing 46. On the other hand, in the axial direction of axis line AX, the pressure plate 77 is displaceable with respect to the clutch housing 46.

Between the pressure plate 77 and the clutch housing 46, a plurality of input side off springs 79 as input side biasing members are disposed at equally-spaced interval along the circumferential direction of the clutch housing 46. Specifically, the plurality of input side off springs 79 are disposed in each slit 46i of the paired arm 46d shown in FIG. 4. The input side off springs 79 is constituted by a compression coil spring. By the input side off spring 79, the pressure plate 77 is biased outwardly in the widthwise direction of the vehicle. In other words, the pressure plate 77 is biased in the direction to be separated from the group of plates 66 by the input side off spring 79.

Thus, in the present embodiment, the pressure plate 77, as the input side pressure member, indirectly presses the roller retainer 69, as the output side pressure member, through the bearing 75 and the shaft 68. Hereby, the pressure plate 77 presses the group of plates 66 indirectly.

The roller retainer 69, the output side retainer 72 and the output side press body 40b are disposed in one side of the group of plates 66. The pressure plate 77, a roller retainer 78 and an input side press body 40a are disposed farther one side than the roller retainer 69, the output side retainer 72 and the output side press body 40b. And the pressure plate 77 as the input side pressure member indirectly presses the group of plates 66 from the same direction as the roller retainer 69 as the direction in which output side pressure member presses the group of plates 66.

Thus, the clutch boss 48 located within the clutch housing 46 can be downsized by the arrangement that the output side roller retainer 69 etc. are disposed near to the group of plates 66 and the input side pressure plate 77 etc. are disposed father away from the group of plates 66 than the output side roller retainer 69 etc. As a result, a downsizing of the clutch 2 can be realized. Also, assembling of the clutch 2 becomes easy.

The roller retainer 78 as an input side retainer is disposed farther outwardly than the pressure plate 77 in the widthwise direction of the vehicle. The roller retainer 78 is formed in the shape of orbicular zone by viewing from the axial direction of axis line AX. The roller retainer 78 faces the surface of the pressure plate 77 that is opposite from the group of plates 66. In the surface of the roller retainer 78 in the side of the pressure plate 77, a plurality of cam surfaces 81 are formed. The plurality of cam surfaces 81 is disposed radially from the axis line AX. Each cam surface 81 is formed to extend inwardly in the widthwise direction of the vehicle as it goes outwardly in the radial direction. Thus, a space 82, of which width becomes narrower as it goes away from the axis line AX, is formed between each of the cam surfaces 81 and the pressure plate 77

Like the pressure plate 77, the outer ends of the roller retainer 78 in the radial direction engages with a plurality of arms 46d shown in FIG.4. The roller retainer 78, hereby, becomes non-rotatable to the clutch housing 46. In other words, the roller retainer 78 rotates with the clutch housing 46. On the other hand, the roller retainer 78 is displaceable to the clutch housing 46 in the axial direction of axis line AX.

The roller retainer 78 is biased inwardly in the widthwise direction of the vehicle by a belleville spring 83 as a biasing member. In other words, the roller retainer 78 is biased to the side of the group of plates 66 by the belleville spring 83. Specifically, the outer ends of the belleville spring 83 in the radial direction are fixed in the axial direction of axis line AX by a spring stopper 84 and a circlip 85.

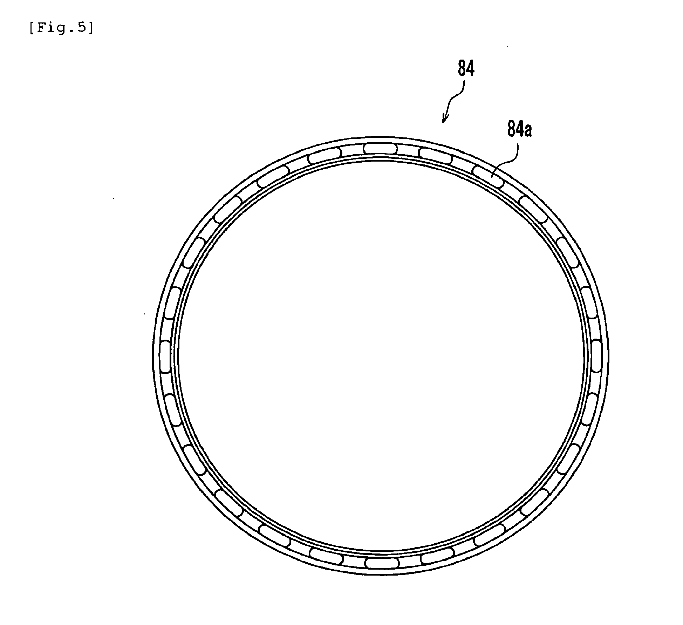

As shown in FIG. 5, a plurality of openings 84a arranged circumferentially are formed in ring-shaped the spring stopper 84. The arm 46d (see FIG. 4) of the clutch housing 46 is inserted into this opening 84a. Deformation of the arm 46d of the clutch housing 46 is suppressed by this.

The belleville spring 83 is in contact with the inner part of the spring stopper 84 in the radial direction. On the other hand, the outer part of the spring stopper 84 in the radial direction is in contact with the end face 46h formed on the arm 46d. Hereby, the spring stopper 84 is arranged not to move to the left relative to the end face 46h in the widthwise direction of the vehicle.

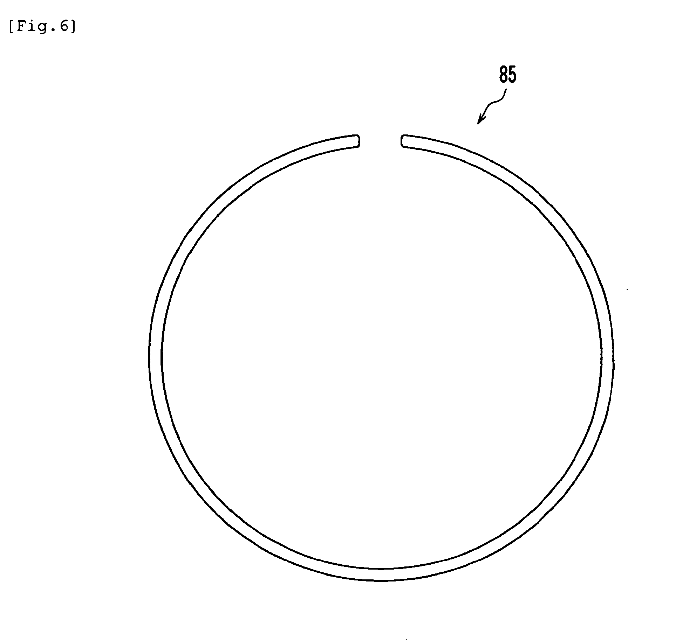

As shown in FIG.6, the circlip 85 is formed in the shape of ring notched partially. The circlip 85 is fitted into the linear groove 46g formed on the arm 46d (see FIG.4). Thus, while movement of the circlip 85 is controlled in the axial direction of axis line AX, the movement of the spring stopper 84 is also controlled. In other words, spring stopper 84 is fixed in the axial direction of axis line AX by the circlip 85 and the end face 46h formed on the arm 46d. As a result, the outer ends of the belleville spring 83 in the radial direction are fixed in the axial direction of axis line AX. Thus, according to the method for fixing the belleville spring 83 using the circlip 85, the belleville spring 83 can be easily fixed. And the belleville spring 83 can be easily removed.

As described above, by the belleville spring 83, the roller retainer 78 as the input side retainer is biased to the side of the group of plates 66, in the axial direction of axis line AX. By the biasing force of the belleville spring 83, the shaft 68, to which the output side retainer 72 was attached, is biased to the side of the group of plates 66 through an input side roller weight 41 and the pressure plate 77. Therefore, the output side retainer 72 is also biased to the side of the group of plates 66 by the belleville spring 83 in the axial direction of axis line AX.

The input side press body 40b is arranged in the space 82. The input side press body 40b is constituted by the plurality of input side roller weights 41. The input side roller weight 41 is more remotely located from the group of plate 66 as compared with the output side roller weight 42 in the axial direction of axis line AX. In other words, the input side roller weight 41 is located, in the axial direction of axis line AX, in the right relative to the output side roller weight 42. The input side roller weight 41 is more remotely located from the axis line AX as compared with the output side roller weight 42 in the radial direction vertical to the axis line AX. Thus, the arrangement of the input side roller weight 41 and the output side roller weight 42 inclined to the axis line AX can prevent the locational interference between the input side roller weight 41 and the output side roller weight 42. As a result, the clutch 2 can be downsized.

While the input side roller weight 41 turns with a rotation of the clutch housing 46, and presses said pressure plate 77 to the side of the group of plates 66 by centrifugal force generated during the turning, it moves to the direction away from the axis line AX concurrently with pushing said the spring 74 outwardly in the widthwise direction of the vehicle. Hereby, the roller retainer 69 moves to the side of the group of plates 66, and the group of plates 66 comes in a press contact state.

The shape of the input side roller weight 41 is not specifically limited as long as the input side roller weight can turn with the rotation of the shaft 68 and is displaceable inwardly and outwardly in the radial direction. Specifically in the present embodiment, the input side roller weight 41 is formed in approximately cylinder shape.

More specifically, the input side roller weight 41, in relation to the axis direction of the input side roller weight 41, is divided into the central portion and the both-sides portions. The both-sides portions are non-rotatably to each other. On the other hand, the central portion is rotatable to the both-sides portions. The cam surface 81 is formed to be in contact with only the central portion. In other words, only the central portion that is in contact with the cam surface 81 can rotate with respect to other portions. By doing so, sliding friction between the cam surface 81 and the input side roller weight 41 can be reduced. As a result, abrasion of the input side roller weight 41 can be reduced. According to the above, the input side roller weight 41 representing an input side press body 40a, the input side pressure plate 77 and the input side roller retainer 78 form an input side transformation mechanism 40a, 77, 78 configured to transform a centrifugal force acting on the input side press body 40a into an axial force along the axis line AX so as to bring the group of plates 66 into engagement.

Moreover, in said embodiment, the input side transformation mechanism 40a, 77, 78 and the output side transformation mechanism 40b, 69, 72 are arranged in axial direction on the same side of the group of plates 66. Preferably, the input side transformation mechanism 40a, 77, 78 is located further away from the group of plates 66 than the output side transformation mechanism 40b, 69, 72.

In this embodiment, the total weight of the plurality of output side roller weights 42 is set to be more heavily than the total weight of the plurality of input side roller weights 41. For example, it may be set that the provided quantity of the output side roller weight 42 and that of the input side roller weight 41 is equal and the weight per one output side roller weight 42 is heavier than the weight per one input side roller weight 41. It may be set that the weight per one output side roller weight 42 and the weight per one input side roller weight 41 are approximately equal, and the quantity of the output side roller weights 42 is provided more than the quantity of the input side roller weight 41. Also, it may be set that the quantity of the output side roller weight 42 is provided more than that of the input side roller weight 41 is, and the weight per one output side roller weight 42 is heavier than the weight per one input side roller weight 41.

However, the present teaching is not limited to the above configuration. For example, the total weight of the plurality of output side roller weights 42 may be set to be lighter than the total weight of the plurality of input side roller weights 41. For example, it may be set that the provided quantity of the output side roller weight 42 and that of the input side roller weight 41 are equal, and the weight per one output side roller weight 42 is lighter than the weight per one input side roller weight 41. It may be set that the weight per one output side roller weight 42 and the weight per one input side roller weight 41 are approximately the same, and the quantity of the output side roller weight 42 is less than that of the input side roller weight 41. Also, it may be set that the quantity of the output side roller weight 42 is less than that of the input side roller weight 41, and the weight per one output side roller weight 42 is lighter than the weight per one input side roller weight 41.

Also, in the present embodiment, the total biasing force of the plurality of output side off springs 71 is set to be weaker than the total biasing force of the plurality of input side off springs 79. Thus, by setting the total weight of the plurality of output side roller weights 42 and the plurality of input side roller weights 41, and the total biasing force of the plurality of output side off springs 71 and the input side off springs 79, the rotational speed of the clutch boss 48 at which the output side roller weight 42 starts moving in a centrifugal direction is set to be lower than the rotational speed of the clutch housing 46 at which the input side roller weight 41 starts moving in a centrifugal direction.

Specifically, it may be set that the provided quantity of the output side off spring 71 and that of the input side off spring 79 are equal, and the biasing force of each of the output side off springs 71 is weaker than the biasing force of each of the input side off springs 79. It may be set that the biasing force of each of the output side off springs 71 and the biasing force of each of the input side off springs 79 are approximately the same, and the quantity of the output side off spring 71 is provided more than that of the input side off spring 79. Also, it may be set that while the quantity of the output side off spring 71 is provided more than that of the input side off spring 79, the biasing force of each of the output side off springs 71 is weaker than the biasing force of the input side off spring 79.

However, the present teaching is not limited to the above configuration. For example, the total biasing force of the plurality of output side off springs 71 may be set to be stronger than the total biasing force of the plurality of input side off springs 79. Specifically, it may be set that the provided quantity of the output side off spring 71 and that of the input side off spring 79 are equal, and the biasing force of each of the output side off springs 71 is stronger than the biasing force of each of the input side off springs 79. It may be set that the biasing force of each of the output side off springs 71 and the biasing force of each of the input side off springs 79 are approximately the same, and the provided quantity of the output side off spring 71 is less than that of the input side off spring 79. Also, it may be set that while the provided quantity of the output side off spring 71 is less than that of the input side off spring 79, and the biasing force of each of the output side off springs 71 is stronger than the biasing force of the input side off spring 79.

A clutch release mechanism 86 as a releasing mechanism for a press contact state is provided in the clutch 2 of the present embodiment. The clutch release mechanism 86 forces to release a press contact state of the group of plates 66 by the force applied by the rider sitting on the motorcycle 1. The clutch release mechanism 86 allows the rider sitting on the motorcycle 1 to disengage the clutch 2.

This embodiment describes an example in which the rider on the motorcycle 1 operates a clutch operation means such as a clutch lever, a clutch pedal, or the like which is not shown, thereby applying the force applied to the clutch lever or the clutch pedal to the clutch release mechanism 86 to forcibly release the press contact state of the group of plates 66. However, the present teaching is not limited to the above configuration. For example, the rider on the motorcycle 1 operates the clutch lever or the clutch pedal (not shown), therefore the drive mechanism such as an oil pump separately provided is operated, the force generated by the oil pump is applied to the clutch release mechanism 86, and finally the press contact state of the group of plates 66 may be released forcibly.

The clutch release mechanism 86 includes a push rod 43 shown in FIG. 1 and FIG. 2 and a push rod drive mechanism 87 shown in FIG. 2 and FIG. 7. As shown in FIG. 1, the push rod 43 is disposed within a through hole 33a formed within the main shaft 33 so as to penetrate in the axial direction of axis line AX, in the main shaft 33. The through hole 33a also serves as an oil supply hole for supplying oil to each of the sliding parts etc. of the clutch 2. Specifically, oil is supplied to each of the sliding parts of the clutch 2 through a gap 89 between the inner wall of the through hole 33a and the push rod 43. The push rod 43 includes a short push rod 43a and a long push rod 43b. The short push rod 43a is disposed relatively outwardly in the widthwise direction of the vehicle. The right edge of the short push rod 43a is in contact with the shaft 68. An O-ring 88 is attached to the short push rod 43a at the approximately central portion in the axial direction thereof. Because of this, the oil, which is supplied through the gap 89, is prevented from reaching the right relative to the O-ring 88 in the widthwise direction of the vehicle. Also, providing the O-ring 88 allows the short push rod 43a to rotate with the main shaft 33. On the other hand, the long push rod 43b does not rotate with the main shaft 33. Because of this, when the main shaft 33 rotates, the short push rod 43a rotates relatively to the long push rod 43b. In view of this, the end face of the short push rod 43a in the side of the long push rod 43b is formed into a curved surface projecting toward the side of the long push rod 43b. This reduces the sliding resistance between the short push rod 43a and the long push rod 43b when the short push rod 43a rotates.

As shown in FIG. 2 and FIG. 7, the left edge of the long push rod 43b is located to the left relative to the left edge of the main shaft 33, and leads to the push rod drive mechanism 87. FIG. 7 is a sectional view of the push rod drive mechanism 87. The upper half portion above the axial line AX in FIG. 7 shows the state that the clutch release mechanism 86 is not driven. In other words, the lower half portion above axial line AX in FIG. 7 shows the state that the push rod 43 is relatively located to the left, and the shaft 68 is not displaced to the right by the push rod 43. On the other hand, the upper half portion below the axis line AX in FIG. 7 shows the state that the clutch release mechanism 86 is driven. In other words, the upper half portion below the axis line AX in FIG. 7 shows the state that the push rod 43 is located relatively to the right and the shaft 68 is displaced to the right by the push rod 43.

As shown in FIG. 7, the push rod drive mechanism 87 includes a cylinder 90 and a piston 91. The piston 91 may be slid and moved in the axial direction of axis line AX with respect to the cylinder 90. The piston 91 is attached to the long push rod 43b. Because of this, sliding and moving of the piston 91 allows the long push rod 43b to move in the axial direction of axis line AX.

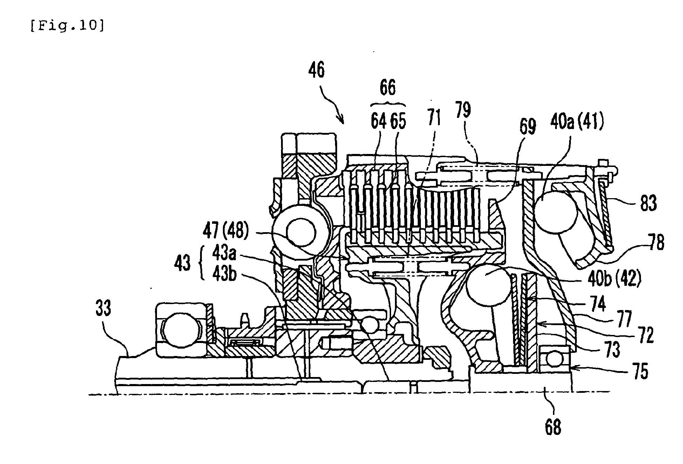

A chamber 92 is comparted and formed between the piston 91 and the cylinder 90. The chamber 92 is filled with oil. The rider sitting on the motorcycle 1 operates the clutch lever or the clutch pedal, therefore, the internal pressure in the chambers 92 is increased. Because of this, the piston 91 and the long push rod 43b moves to the right. Therefore, as shown in FIG. 10, the shaft 68, the pressure plate 77 and the output side retainer 72 attached to the shaft 68 also move to the right. As a result, the roller retainer 69 moves in the right, and the press contact state of the group of plates 66 is released.

A compression coil spring 93 is disposed between the piston 91 and the crankcase 31. The piston 91 is biased by the compression coil spring 93 to the left. In other words, the push rod 43 is biased to be displaced to the left in such a direction that the clutch 2 is engaged. Because of this, when the rider sitting on the motorcycle 1 releases the operation of the clutch lever and the clutch pedal, the push rod 43 is certainly moved to the left.

For example, if there is not provided the compression coil spring 93, even if the operation of the clutch lever and the clutch pedal is released, there may be the situation that the push rod 43 is still located in the right. In such a situation, for example, if the engine 4 is stopped and the clutch 2 is disengaged, the push rod 43 cannot be further move to the right. Therefore, the rider sitting on the motorcycle 1 cannot operate the clutch lever or the clutch pedal. Accordingly, for example, when the motorcycle 1 cannot start the engine 4 in a state where the clutch lever or the clutch pedal is not operated, the engine 4 cannot be started.

In contrast, in the motorcycle 1, because the compression coil spring 93 is disposed as described above, the situation that the push rod 43 is still located in the right will be avoided even if the operation of the clutch lever and the clutch pedal is released. Therefore, in the shutdown period of the engine 4, the rider on the motorcycle 1 can always operate the clutch lever or the clutch pedal.

As described above, in the present embodiment, the pressure plate 77 as the input side pressure member indirectly presses the group of plate 66 in the same direction as the direction in which the roller retainer 69 as the output side pressure member presses the group of plate 66.

For example, when the pressure plate 77 and the roller retainer 69 press the group of plates 66 from the opposite direction mutually, the position of the pressure plate 77 when the clutch 2 is disengaged is different depending on the position of the roller retainer 69 in the axial direction of axis line AX. Specifically, for example, when the roller retainer 69 is located relatively in the right in the axial direction of axis line AX, the clutch 2 is not disengaged if the pressure plate 77 is not displaced relatively to the right. On the other hand, for example, when the roller retainer 69 is relatively located in the left in the axial direction of axis line AX, the clutch 2 is disengaged even if the pressure plate 77 is not displaced remarkably in the right. Because of this, when the pressure plate 77 and the roller retainer 69 press the group of plates 66 from the opposite direction mutually, the position of the push rod 43 when the clutch 2 is disengaged is different depending on the position of the roller retainer 69 in the axial direction of axis line AX.

In contrast, like the present embodiment, when the pressure plate 77 and the roller retainer 69 are disposed in the same side with respect to the group of plates 66, the position of the push rod 43 when the clutch 2 is disengaged becomes constant.

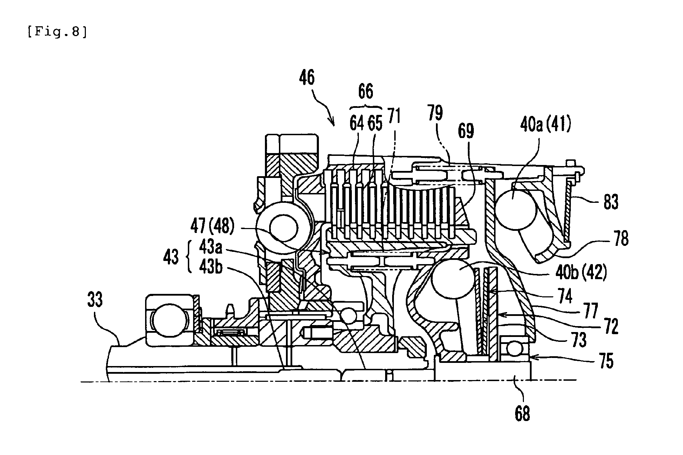

Next, referring to FIG. 1, FIGS. 8 to 10, the operation of the clutch 2 will be described. FIGS. 8 to 10 show only a section of a part of one side of the axis line AX of the clutch 2 in view of the clutch 2 being rotary-symmetric in relation to the axis line AX.

The upper half portion of the clutch 2 above the axis line AX shown in FIG.1 illustrates the state where the engine 4 is in an idling state and the clutch 2 is not engaged. On the other hand, the lower half portion of the clutch 2 below the axis line AX shown in FIG.1 illustrates an immediate state where the rotating speed of the crankshaft 32 is increased and the clutch 2 is engaged.

When the engine 4 is started and is in an idling state, the clutch housing 46 is rotating with the crankshaft 32. However, the rotational speed of the clutch housing 46 is relatively low. Because of this, the centrifugal force acting on the input side roller weight 41 is relatively small. Therefore, the input side roller weight 41 is located relatively inside. Therefore, the pressure plate 77, the shaft 68 and the output side retainer 72 are located in the relatively right side by biasing force of the input side off spring 79. Also, in an idling state, the main shaft 33 is not rotating or is rotating at a relatively low rotational speed. Therefore, the centrifugal force acting on the output side roller weight 42 is relatively small. Accordingly, the output side roller weight 42 is located relatively inside. Therefore, the roller retainer 69 is located in the relatively right side by biasing force of the output side off spring 71. As a result, the distance between the roller retainer 69 and the bottom portion 46a of the clutch housing 46 is relatively large, and the group of plates 66 is in the non-press contact state. Therefore, the rotation of the clutch housing 46 is not transmitted to the clutch boss 48.

If the rotational speed of crank shaft 32 is relatively increased, the rotational speed of the clutch housing 46 is relatively increased. As the rotational speed of the clutch housing 46 is increased, the centrifugal force acting on input side roller weight 41 is increased. As a result, the input side roller weight 41 moves outwardly. Therefore, the pressure plate 77 is pressed to the left by the input side roller weight 41. Hereby, the pressure plate 77, the shaft 68 and the output side retainer 72 moves to the left while opposing the biasing force by the input side off spring 79. As a result, the roller retainer 69 also moves to the left while opposing the biasing force of the output side off spring 71 through the output side roller weight 42. In other words, the roller retainer 69 also moves to the side of the group of plates 66. Hereby, the group of plates 66 comes in a press contact state, and the clutch 2 is engaged. Embodiment at that time is illustrated in the lower half portion below the axis line AX of FIG. 1.

When the clutch 2 is engaged, a rotation of the clutch housing 46 is transmitted to the clutch boss 48 through the group of plates 66. Hereby, the clutch boss 48 rotates with the clutch housing 46. When the clutch boss 48 begins to rotate, the output side roller weight 42 begins to turn accordingly. Therefore, the centrifugal force acting on the output side roller weight 42 is increased. As a result, the output side roller weight 42 moves outwardly in a centrifugal direction. FIG. 8 illustrates the state at that time.

As shown in the lower half portion below the axis line AX in FIG.1, the clutch 2 is configured so that the clutch 2 is engaged when only the input side roller weight 41 moves outwardly in a centrifugal direction. In other words, the clutch 2 is configured in such a way that the group of plates 66 comes in a press contact state when only the input side roller weight 41 moves outwardly in the centrifugal direction. Therefore, from the state that only the input side roller weight 41 moves outwardly in a centrifugal direction, the roller retainer 69 cannot substantially move to the left any more. Therefore, even if the output side roller weight 42 further moves outwardly in the centrifugal direction from the state, the roller retainer 69 can not move substantially nearer the group of plates 66. Instead of that, as shown in FIG.8, the spring 74 and the belleville spring 83 are deformed. Therefore, in the clutch 2 according to the present embodiment, the capacity of the clutch 2 is determined by elastic force of the belleville spring 83.

Next, the case where the clutch 2 is disengaged will be described. In the state where the clutch 2 shown in FIG. 8 is engaged, as the rotational speed of the crankshaft 32 decreases, the centrifugal force acting on the input side roller weight 41 and the output side roller weight 42 decrease. Herein, in the present embodiment, as described above, the rotational speed of the clutch boss 48 at which the output side roller weight 42 starts moving in the centrifugal direction is set to be lower than that of the roller weight 41. In other words, first, the input side roller weight 41 moves inwardly in the centrifugal direction if the rotational speed decreases when the clutch housing 46 and the clutch boss 48 rotate integrally. However, the output side roller weight 42 does not move inwardly in the centrifugal direction immediately. Because of this, even if the rotational speed of the crankshaft 32 decreases, the clutch 2 is not necessarily disengaged immediately. Because the clutch 2 remains engaged, the engine brake works. Hereby, the rotation of the main shaft 33 decreases gradually. Accordingly, the centrifugal force acting on the output side roller weight 42 decreases gradually. And, when the rotational speed of the main shaft 33 becomes equal to or less than a predetermined rotational speed, the output side roller weight 42 also moves inwardly in the centrifugal direction. As a result, the roller retainer 69 moves to the right, and the clutch 2 is disengaged.

In other words, in the clutch 2 according to present embodiment, even if the rotational speed of the crankshaft 32 becomes low, the engagement state of the clutch 2 is maintained if the rotational speed of the main shaft 33 is relatively high. Even if the rotational speed of the clutch housing 46 decreases to the rotational speed at which the input side roller weight 41 moves inwardly in the centrifugal direction, the clutch 2 remain engaged until the rotational speed of the clutch housing 46 and the clutch boss 48 reaches the rotational speed at which the output side roller weight 42 moves inwardly in the centrifugal direction.

Specifically, in the present embodiment, the following relationship is satisfied.

$$r_1 > r_2 \cdots (1)$$

wherein $r_1$ is the rotational speed for input side roller weight 41 to move inwardly in the centrifugal direction
and $r_2$ is the rotational speed for output side roller weight 42 to move inwardly in the centrifugal direction.

For example, in the case where the output side roller weight 42 is not provided and the pressure plate 77 directly presses the group of plates 66, the clutch 2 will be disengaged when the rotational speed of the clutch housing 46 reaches $r_1$.

In contrast, in the present embodiment in which the output side roller weight 42 is provided, the clutch 2 will not be disengaged until the rotational speed of the clutch housing 46 becomes $r_2$ that is lower than $r_1$. In

other words, the engagement state of the clutch 2 will be maintained until the rotational speed of the clutch housing 46 becomes relatively lower. As a result, the engine brake can also work in the relatively low engine speed range.

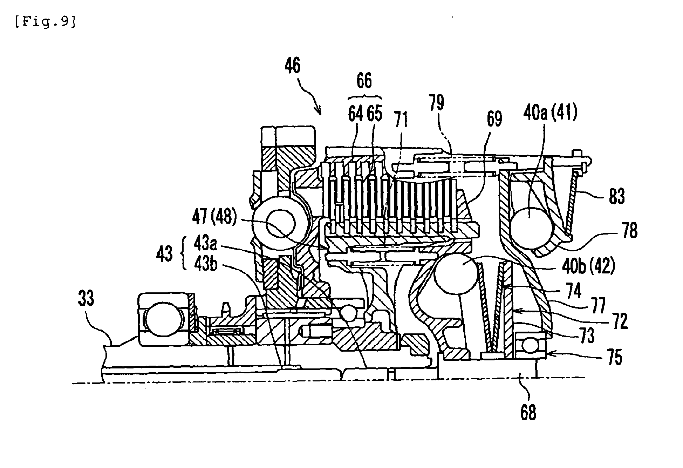

Also, for example, when the rotational speed of the main shaft 33 becomes relatively high even if the engine 4 is in a idling state and the rotational speed of the crankshaft 32 is relatively low, only the output side roller weight 42 moves outwardly in the centrifugal direction as shown in FIG.9. Hereby, the roller retainer 69 is pressed to the left, and the group of plates 66 is pressed and contacted. As a result, as shown in FIG. 9, the clutch 2 is engaged. When the clutch 2 is engaged, the clutch housing 46 starts rotating with the clutch boss 48. The rotation of the clutch housing 46 is transmitted to the crankshaft 32, and the engine brake works. Hereby, the rotational speed of the clutch 2 and the main shaft 33 are reduced. And, when the rotational speed of the main shaft 33 and the clutch 2 become lower than the above rotational speed $r_2$, the clutch 2 is disengaged.

Thus, in the present embodiment, even if the rotational speed of crank shaft 32 is a relatively low, the clutch 2 is engaged in the case where the rotational speed of the main shaft 33 is relatively high. As a result, until the rotational speed of the main shaft 33 becomes low, the engine brake can work.

This effect can be also obtained in the case where the rotational speed at which the output side roller weight 42 moves inwardly in the centrifugal direction is higher than that of the input side roller weight 41.

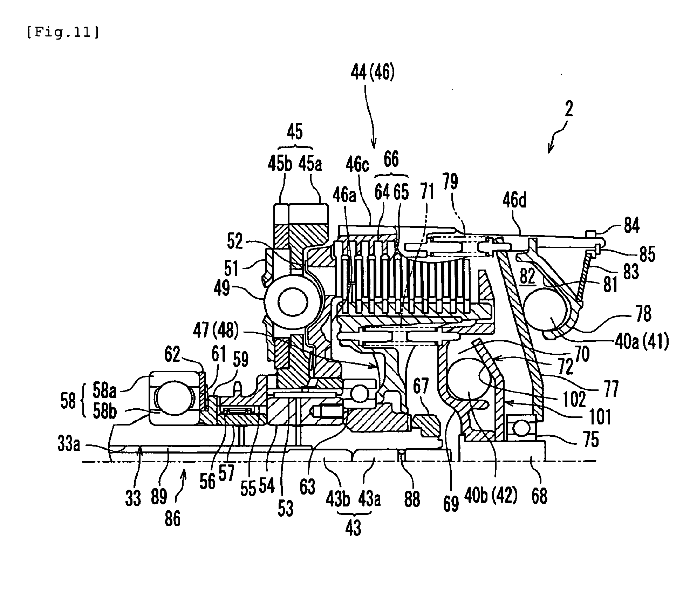

Referring to FIG. 11 to 17, the alternatives to the above embodiment will be described in detail as follows:

In the description of modified embodiments 1 to 4, components which perform substantially the same functions are described using the same reference numerals as the above embodiments and the description thereof is omitted.

The above embodiment describes the example constituting the output side retainer 72 using the spring 74. However, the present teaching is not limited to this configuration. For example, as shown in FIG. 11, a plate 101 having no biasing member may be disposed in place of the output side retainer 72 having the spring 74.

In the example shown in FIG. 11, the outer portions of the output side retainer 72 in the radial direction is formed so as to extend to the left as it goes away from the axis line AX in the radial direction. Hereby, a cam surface 102 that extends to the left as it goes away from the axis line AX in the radial direction is formed. As a result, the space 70 of which width in the direction of axis line AX becomes narrower as it goes away from the axis line AX in the radial direction is formed.

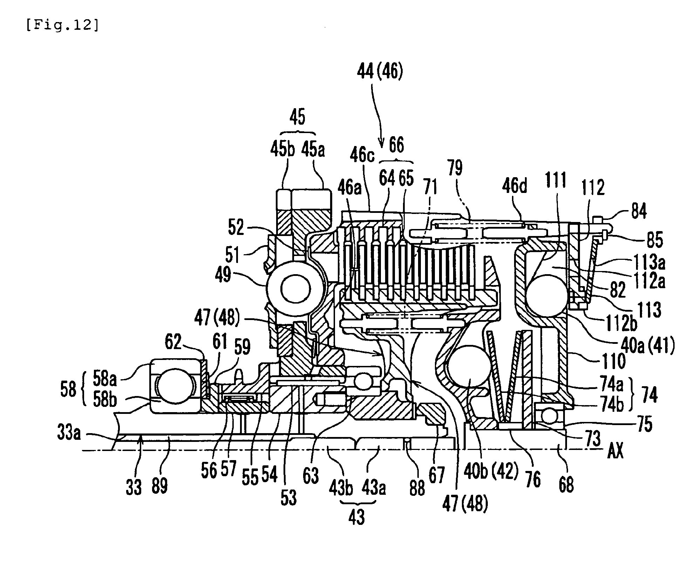

FIG.12 is a sectional view of the clutch according to the modified embodiment 2. In the present embodiment, a roller retainer 110 is disposed instead of the pressure plate 77. The central portion of the roller retainer 110 is fixed by the outer ring 75b of the bearing 75. Hereby, the roller retainer 110 is rotatable with respect to the shaft 68 and the main shaft 33.

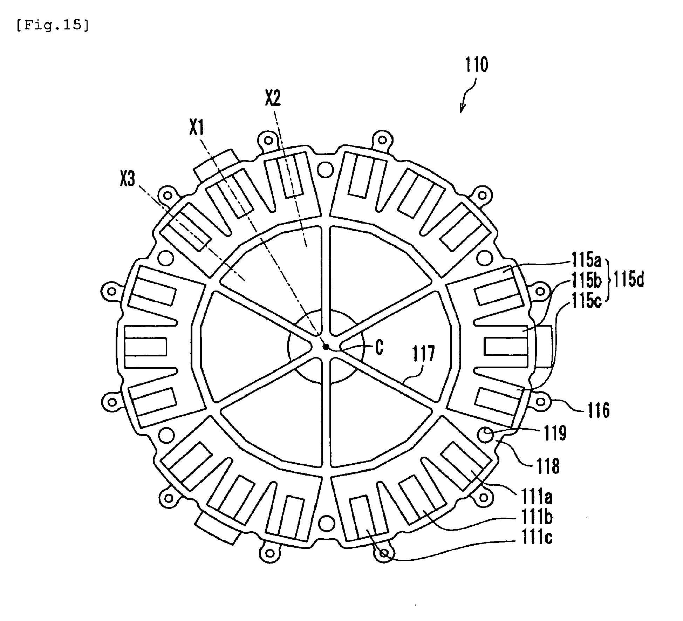

As shown in FIG. 15, in an outer peripheral portion of the roller retainer 110, a projected portion 116 projecting outwardly in the radial direction is formed. Engagement between the projected portion 116 and the arm 46d of the clutch housing 46 prevents the roller retainer 110 from rotating with respect to the clutch housing 46. Therefore, the roller retainer 110 rotates with the clutch housing 46.

The plurality of guide parts 115 is formed in outside portion of the roller retainer 110 in radial direction The plurality of guide parts 115 include a first guide part 115a, a second guide part 115b and a third guide part 115c. A pair of guides 115d includes the first guide part 115a, the second guide part 115b and the third guide part 115c. In the modified embodiment 2, there are arranged six pairs of guides 115d in the circumferential direction. In other words, a total 18 guide part 115 are formed.

The extending direction $X_1$ of the second guide part 115b is approximately same as the radial direction. On the other hand, the extending direction $X_2$ of the first guide part 115a and the extending direction $X_3$ of a third guide part 115c are slightly different from the radial direction. By disposing the first to third guide parts 115a to 115c in this manner, the distance between the outside portion of the first guide part 115a in the radial direction and the outside portion of the second guide part 115b in the radial direction is set to be relatively narrow. The distance between the outside portion of the third guide part 115c in the radial direction and the outside portion of the second guide part 115b in the radial direction is set to be relatively narrow. As a result, the outside portion of a pair of guides 115d in the radial direction has a relatively narrow width in the circumferential direction. Therefore, it is relatively easy to secure the space for forming a rib 118 having a relatively wide width of the outside of the radical direction between the adjacent pairs of guides 115d. A threaded hole 119 is formed in the outside portion in the radial direction of the rib 118 formed relatively wide.

Each of the ribs 118 is formed continuously to a rib 117 which is located relatively inside in the radial direction and extends radially from a center C. Hereby, a plurality of ribs, which extends from the center C to the outer circumferential portion of the roller retainer 110, is formed. Therefore, the stiffness of roller retainer 110 is improved. The threaded hole 119 is formed in each of the ribs 118.

The cam surface 111 is formed in each of the guide parts 115. Specifically, the cam surface 111 extends in the direction in which the guide part 115 extends. The cam surface 111 extends from the middle to the outside end of guide part 115 in the radial direction. The cam surface 111 is in contact with the rotatable middle part of the roller weight 41. The cam surface 111 is provided to be projected from the surface of the guide part 115.

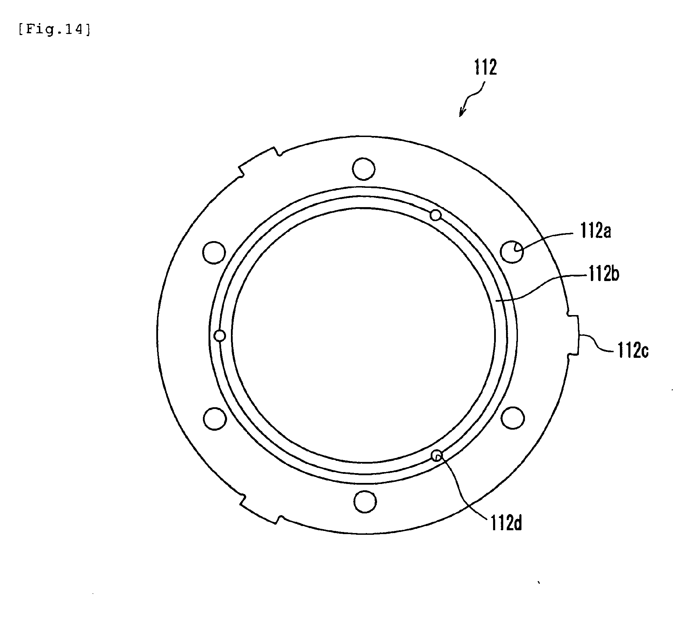

As shown in FIG. 12, in the modified embodiment 2, a ring-shaped plate 112 in a plane view, which faces the roller retainer 110, is disposed. As shown in FIG. 12, the plate 112 is plane-plate-shaped in a side view. As shown in FIG. 14, a projected portion 112c, which is projected outwardly in the radial direction, is formed in the outer peripheral part of the plate 112. The engagement between the projected portion 112c and the arm 46d of the clutch housing 46 prevents the plate 112 from rotating with respect to the clutch housing 46. Therefore, the plate 112 rotates with the clutch housing 46. On the other hand, the plate 112 is displaceable in the axial direction of axis line AX.

As shown in FIG. 12 and FIG. 14, a projected portion 112b is formed in the inner portion of the plate 112 in the radial direction. Also, a plurality of through holes 112a, which are arranged in the circumferential direction, are formed approximately in the middle portion of the plate 112 in the radial direction.

As shown in FIG. 12 in the modified embodiment 2, like the above described embodiment, the outer ends of a belleville spring 113 in the radial direction are fixed to the clutch housing 46 in the axial direction of axis line AX by the spring stopper 84 and the circlip 85.

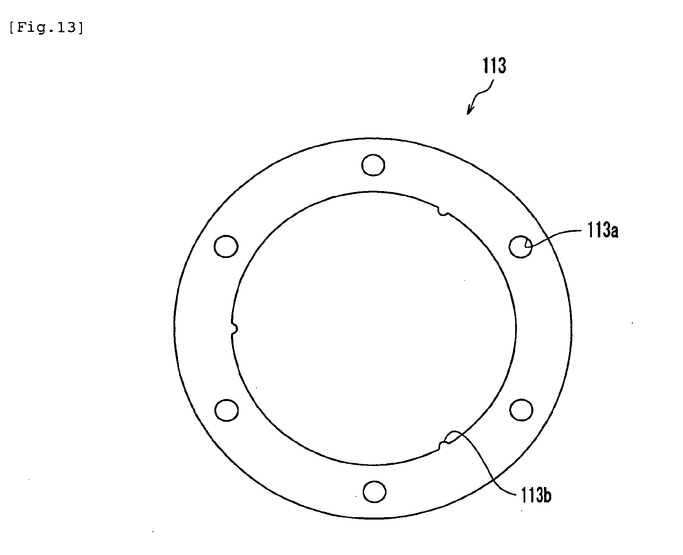

As shown in FIG. 13, in the inner end of the belleville spring 113 in the radial direction, a plurality of projected portions 113b, which are projected inwardly in the radial direction, are formed. The projected portion 113b is engaged with a depressed portion 112d of the plate 112 shown in FIG. 14. Hereby, in the circumferential direction, the belleville spring 113 is fixed to the plate 112. Also, a plurality of through holes 113a, which are arranged in the circumferential direction, are formed in approximately the central portion of the belleville spring 113 in the radial direction.

When the clutch according to the modified embodiment 2 is assembled, by inserting a screw through the through hole 113a in the belleville spring 113 and the through hole 112a in the plate 112 and fastening the screw to the threaded hole 119 in the roller retainer 110, the roller retainer 110, the input side roller weight 41, the plate 112 and the belleville spring 113 are integrated. At the same time, the widths of the roller retainer 110, the input side roller weight 41, the plate 112 and the belleville spring 113 in the axial direction of axis line AX is narrowed. In such a state, the integrated roller retainer 110, input side roller weight 41, plate 112 and belleville spring 113 are assembled into the clutch housing 46. Afterwards, the spring stopper 84 and the circlip 85 are attached.

In this case, since the widths of the roller retainer 110, the input side roller weight 41, the plate 112 and the belleville spring 113 in the axial direction of axis line AX are kept narrow, the spring stopper 84 and the circlip 85 can be attached relatively easily. After the spring stopper 84 and the circlip 85 are attached, a screw which was fastened to the threaded hole 119 is loosened and removed, and the clutch according to the modified embodiment 2 can be finally built up.

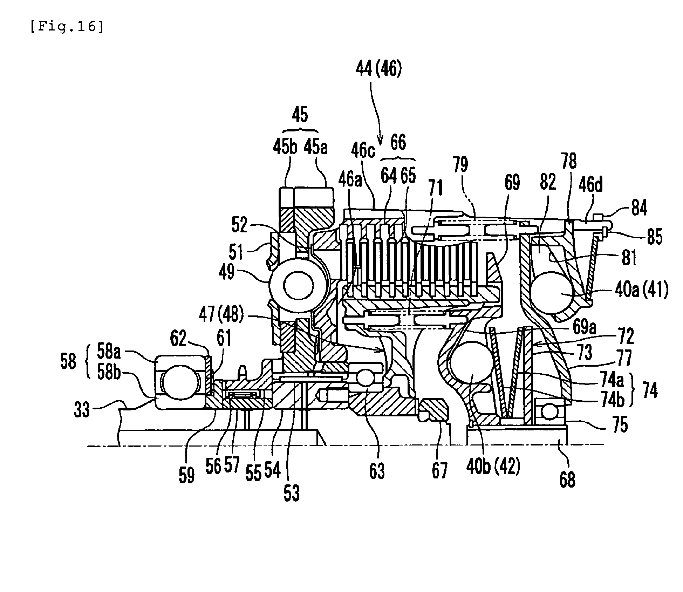

In the above embodiment, the clutch 2 having the clutch release mechanism 86 is described as an example. However, the present teaching is not limited to the configuration of the above embodiment. In other words, the clutch according to the present teaching may be a clutch without a clutch release mechanism as shown in FIG. 16.

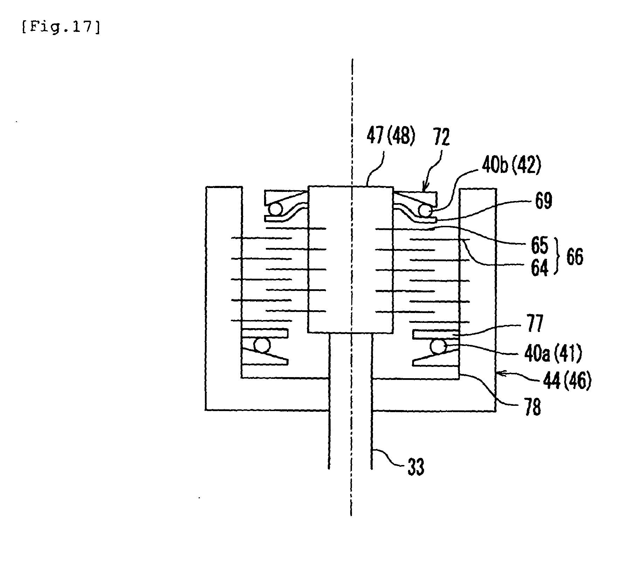

In the above embodiment, the case where the pressure plate 77 and the roller retainer 69 are in the same side with respect to the group of plates 66 is described. In other words, the case where the two kinds of roller weight 41 and 42 are in the same side with respect to the group of plates 66 is described. However, the present teaching is not limited to the configuration of the above embodiment. As shown in FIG. 17, in relation to the group of plates 66, the pressure plate 77 may be disposed in the opposite side of the roller retainer 69. In other words, the two kinds of roller weight 41 and 42 may be disposed in the other side mutually.

According to this, the locational interference between the input side roller weight 41 and the output side roller weight 42 can be prevented. Therefore, both the input side roller weight 41 and the output side roller weight 42 can be disposed in the position to be relatively apart from the axis line AX. Accordingly, relatively large centrifugal force acting on both roller weights 41 and 42 can be generated without increasing the thickness of the clutch 2 in the axial direction of axis line AX.

FIG.17 shows a schematic illustration showing the positional relation between the pressure plate 77, the roller retainer 69, two kinds of roller weight 41,42, and the group of plates 66. In FIG. 17, the drawing of the specific embodiment of the clutch according to the modified embodiment 4 is omitted.

In this modification, the input side transformation mechanism 40a, 77, 78 and the output side transformation mechanism 40b, 69, 72 are arranged in axial direction on opposite sides of the group of plates 66.

In the above embodiment, the motorcycle 1, a so-called motorcycle in a narrow sense shown in FIG.1, is taken for an example of the vehicle described. However, the vehicle is not limited thereto. The vehicle may be a straddle-type vehicle, for example, such as an off-road type motorcycle, a scooter or a moped, or an ATV (All Terrain Vehicle). Also, the vehicle may be a vehicle which is a 4-wheeled vehicle etc. other than a straddle-type vehicle.

In the above embodiment, a vehicle with the engine 4 is taken for an example and described as a preferred embodiment. However, the vehicle may be the vehicle without an engine. For example, the vehicle may include any kind of drive source. For example, the vehicle may include an electric motor etc. as a drive source.

Also, in the above embodiment, an example using a water cooling, 4-cycle, parallel, 4-cylinder type engine 4 is described, however, the type of engine is not specifically limited in the present teaching.

The driving force transmission mechanism that transmits power from the power unit 3 to the rear wheel 19 is not limited to the chain 25, and the driving force transmission mechanism may be, for example, such as a driveshaft and a belt.

In the above embodiment, an example that the clutch housing 46 constitutes the input side clutch member 44 and the clutch boss 48 constitutes the output side clutch member 47 is described. However, the present teaching is not limited to this configuration. For example, it is possible that the clutch housing 46 constitutes the output side clutch member 47 and the clutch boss 48 constitutes the input side clutch member 44.

A rider sitting on the motorcycle 1 operates a clutch lever or a clutch pedal (not shown), and the drive mechanism such as an oil pump may be operated. And, the force that is generated by the oil pump may be applied to the clutch release mechanism 86 to forcibly release a press contact state of the group of plates 66.

A "motorcycle" is not only a so-called motorcycle in a narrow sense but also a motorcycle in a broad sense including such as an off road vehicle, a scooter and a moped.

The clutch 2 is useful for vehicles such as a two-wheeled motor cycle.

The description above discloses (among others) an embodiment of a clutch comprising: a group of plates including; an input side clutch member rotating around an axis line, an output side clutch member rotating around said axis line, an input side clutch disc rotating with said input side clutch member, and an output side clutch disc facing displaceably said input side clutch disc in the axial direction of said axis line and rotating with said output side clutch member, an input side pressure member rotating with said input side clutch member, being displaceable in the axial direction of said axis line, and pressing said group of plates directly or indirectly by moving to the side of said group of plates in the axial direction of said axis line, bringing said group of plates into a press contact state; an input side retainer facing the opposite side surface to the side of said group of plates of said input side pressure member, forming a space of which width is narrowed as the distance from said axis line increases together with said input side pressure member, and being fixed in the axial direction of said axis line, or being biased to the side of said group of plates, to said input side clutch member; an input side press body being disposed in the space between said input side pressure member and said input side retainer, turning around said axis line with the rotation of said input side clutch member, and moving in the direction to go away from said axis line with pressing said input side pressure member to the side of said group of the plates by the centrifugal force generated during said turning; an output side pressure member rotating with said output side clutch member, being displaceable in the axial direction of said axis line, and pressing said group of plates directly or indirectly by moving to the side of said group of plates in the axial direction of said axis line, bringing said group of plates into a press contact state; an output side retainer facing the opposite side surface of said output side pressure member relative to the side of said group of plates, forming a space of which width is narrowed as the distance from said axis line increases together with said output side pressure member, and being fixed in the axial direction of said axis line, or being biased to the side of said group of plates, to said output side clutch member; and an output side press body being disposed in the space between said output side pressure member and said output side retainer, turning around said axis line with the rotation of said output side clutch member, and moving in the direction to go away from said axis line with pressing said output side pressure member to the side of said group of the plates by the centrifugal force generated during said turning.

Preferably, the rotational speed of said output side clutch member at which said output side press body starts moving in a centrifugal direction is lower than that of said input side clutch member at which said input side press body starts moving in a centrifugal direction.

Preferably, the clutch further comprises an input side biasing member disposed between said input side clutch member and said input side pressure member, and biasing said input side pressure member in a direction away from said group of plates; and an output side biasing member disposed between said output side clutch member and said output side pressure member, and biasing said output side pressure member in a direction away from said group of plates; wherein the biasing force of said output side biasing member is weaker than that of said input side biasing member.

Further, preferably said input side clutch member comprises clutch housing and said output side clutch member comprises a clutch boss which is disposed in said clutch housing.

The clutch, preferably further comprises a release mechanism for releasing press contact which forcibly release the press contact state of said group of plates by force applied externally.

Still further, preferably said input side pressure member and said output side pressure member press said group of plates to each other from the same direction.

Preferably, said output side pressure member, said output side retainer and said output side press body are disposed to one side of said group of plates, and said input side pressure member, input side retainer and input side press body are disposed farther one side than said output side pressure member, said output side retainer and said output side press body.

Preferably, said input side pressure member and said output side pressure member press said group of plates to each other from the opposite direction in the axial direction of said axis line.

Preferably, said input side pressure member presses said a group of plates indirectly by pressing said output side retainer directly or indirectly and biasing said output side retainer to the side of said group of plates.

Further, preferably said input side press body is located more apart from, in the axial direction of said axis line, said group of plates than said output side press body is, and is located more apart from, in the direction vertical to said axis line, said axis line than said output side press body is.

Preferably, a vehicle comprises a clutch according to one of the embodiments above.

In order to provide a clutch, having a new structure without a one-way clutch, that remains engaged until input side rotational speed becomes relatively low, the following is suggested:

A pressure plate 77 presses a group of plates 66 directly or indirectly by moving in the axial direction of an axis line, bringing the group of plates 66 into a press contact state. An input side press body 40a turns around the axis line with the rotation of a clutch housing 46, and presses the pressure plate 77 to the side of the group of plates 66 by centrifugal force generated during the turning and moves to the axial direction to be away from the axis line. A roller retainer 69 presses the group of plates 66 directly or indirectly by moving to the direction of the axis line, bringing the group of plates 66 into a press contact state. An output side press body 40b turns around the axis line with the rotation of an output side clutch member, and presses the roller retainer 69 to the side of the group of plates 66 by centrifugal force generated during the turning and moves to the direction to be away from the axis line.

**Claims**

1. Clutch comprising:

an input side clutch member (44) rotatable around an axis line (AX), and at least an input side clutch plate (64) rotatable with said input side clutch member (44);

an output side clutch member (47) separately from the input side clutch member (44) rotatable around said axis line (AX), and at least an output side clutch plate (65) rotatable with said output side clutch member (47), said output side clutch plate (65) facing said input side clutch plate (64) so as to form a group of plates (66), and being displaceable in axial direction along said axis line (AX); an input side transformation mechanism (40a,77,78,110,112) transforming centrifugal force into axial force along the axis line (AX) depending on the rotational speed of said input side clutch member (44) so as to bring the group of plates (66) into engagement, **characterized**

**by** an output side transformation mechanism (40b,69,72) transforming centrifugal force into axial force along the axis line (AX) depending on the rotational speed of said output side clutch member (47) so as to bring the group of plates (66) into engagement.

2. Clutch according to claim 1, wherein at least an input side biasing member (79) is disposed between said input side clutch member (44) and said input side transformation mechanism (40a, 77, 78, 110, 112), and biasing said input side transformation mechanism (40a, 77, 78, 110, 112) in a direction away from said group of plates (66); and/or at least an output side biasing member (71) is disposed between said output side clutch member (47) and said output side transformation mechanism (40b,69,72), and biasing said output side transformation mechanism (40b, 69,72) in a direction away from said group of plates (66), wherein, preferably, the overall biasing force of said output side biasing member (71) is weaker than the overall biasing force of said input side biasing member (79).

3. Clutch according to claim 1 or 2, wherein said input side clutch member (44) comprises a clutch housing (46) and/or said output side clutch member (47) comprises a clutch boss (48) which is, preferably, disposed in said clutch housing (46).

4. Clutch according to one of claims 1 to 3, wherein a clutch release mechanism (86) is configured to forcibly release a press contact state of said group of plates (66) by force applied externally.

5. Clutch according to one of claims 1 to 4, wherein in axial direction the input side transformation mechanism (40a,77,78,110,112) and the output side transformation mechanism (40b,69,72) are arranged on the same side of the group of plates (66) and, preferably, the input side transformation mechanism (40a, 77, 78, 110, 112) is located further away from the group of plates (66) than the output side transformation mechanism (40b,69,72).

6. Clutch according to one of claims 1 to 4, wherein in axial direction the input side transformation mechanism (40a,77,78,110,112) and the output side transformation mechanism (40b,69,71) are arranged on opposite sides of the group of plates (66).

7. Clutch according to one of claims 1 to 6, wherein the input side transformation mechanism (40a, 77,78,110,112) comprises an input side pressure member (77,112) rotatable with said input side clutch member (44) and being displaceable in axial direction so as to press said group of plates (66) directly or indirectly by moving towards said group of plates (66), thereby bringing said group of plates (66) into a press contact state; and/or the output side transformation mechanism (40b,69,72) comprises an output side pressure member (69) rotatable with said output side clutch member (47) and being displaceable in axial direction so as to press said group of plates (66) directly or indirectly by moving towards said group of plates (66), thereby bringing said group of plates (66) into a press contact state.

8. Clutch according to claim 7, wherein the input side transformation mechanism (40a,77,78,110,*112) further comprises an input side retainer (78,110) facing said input side pressure member (77,112) and forming a space (82), whose width is narrowed as the distance from said axis line (AX) increases, together with said input side pressure member (77,112), said input side retainer (78,110) being fixed in axial direction to said input side clutch member (44) or being biased towards said group of plates (66); and, preferably, an input side press body (40a) is disposed in the space (82) between said input side pressure member (77,112) and said input side retainer (78,110) so as to move in the direction away from said axis line (AX), thereby pressing said input side pressure member (77,112) towards said group of plates (66) by centrifugal force generated during rotation of the input side clutch member (44).

9. Clutch according to claim 7 or 8, wherein the output side transformation mechanism (40b,69,72) further comprises an output side retainer (72) facing said group of plates (66) and forming a space (70), whose width is narrowed as the distance from said axis line (AX) increases, together with said output side pressure member (69), said output side retainer (72) being fixed in axial direction to said output clutch member (47) or being biased towards said group of plates (66); and, preferably, an output side press body (40b) is disposed in the space (70) between said output side pressure member (69) and said output side retainer (72) so as to move in the direction away from said axis line (AX), thereby pressing said output side pressure member (69) towards said group of plates (66) by centrifugal force generated during rotation of said output side clutch member (49).

10. Clutch according to claim 9, wherein the rotational speed of said output side clutch member (47) at which said output side press body (40b) starts moving in centrifugal direction is lower than that of said input side clutch member (44) at which said input side press body (40a) starts moving in centrifugal direction.

11. Clutch according to one of claims 7 to 10, wherein said input side pressure member (77,112) and said output side pressure member (69) are arranged to press said group of plates (66) towards each other from the same direction.

12. Clutch according to one of claims 7 to 10, wherein said input side pressure member (77,112) and said output side pressure member (69) are arranged to press said group of plates (66) towards each other from opposite directions in axial direction.

13. Clutch according to one of claims 9 to 12, wherein said input side pressure member (77,112) is configured to press said group of plates (66) indirectly by pressing said output side retainer (72) directly or indirectly and biasing said output side retainer (72) towards said group of plates (66).

14. Clutch according to one of claims 9 to 13, wherein in axial direction said input side press body (40a) is located further away from said group of plates (66) than said output side press body (40b); and/or in centrifugal direction said input side press body (40a) is located further away from said axis line (AX) than said output side press body (40b).

15. Vehicle, in particular straddle-type vehicle such as a motorcycle, comprising a clutch according to one of claims 1 to 14.

**Patentansprüche**

1. Kupplung, umfassend:

Ein eingabeseitiges Kupplungselement (44), das um eine Achsenlinie (AX) drehbar ist, und zumindest eine eingabeseitige Kupplungsscheibe (64), die mit dem besagten eingabeseitigen Kupplungselement (44) drehbar ist;
Ein ausgabeseitiges Kupplungselement (47), das getrennt von dem eingabeseitigen Kupplungselement (44) um die besagte Achsenlinie (AX) drehbar ist, und zumindest eine ausgabeseitige Kupplungsscheibe (65), die mit dem besagten ausgabeseitigen Kupplungselement (4) drehbar ist, wobei die besagte ausgabeseitige Kupplungsscheibe (65) der besagten eingabeseitigen Kupplungsscheibe (64) zugewandt ist, um eine Gruppe von Scheiben (66) zu bilden und in einer axialen Richtung entlang der besagten Achsenlinie (AX) verschiebbar zu sein;
einen eingabeseitigen Transformationsmechanismus (40a, 77, 78, 110, 112), der eine Zentrifugalkraft in eine Axialkraft entlang der Achsenlinie (AX) in Abhängigkeit von der Drehgeschwindigkeit des besagten eingabeseitigen Kupplungselements (44) transformiert, um die Gruppe von Scheiben (66) in Eingriff zu bringen, **gekennzeichnet durch**

einen ausgabeseitigen Transformationsmechanismus (40b, 69, 72), der eine Zentrifugalkraft in eine Axialkraft entlang der Achsenlinie (AX) in Abhängigkeit von der Drehgeschwindigkeit des besagten ausgabeseitigen Kupplungselements (47) transformiert, um die Gruppe von Scheiben (66) in Eingriff zu bringen.

2. Kupplung im Einklang mit Anspruch 1, wobei zumindest ein eingabeseitiges Vorspannelement (79) zwischen dem besagten eingabeseitigen Kupplungselement (44) und dem besagten eingabeseitigen Transformationsmechanismus (40a, 77, 78, 110, 112) angeordnet ist und den besagten eingabeseitigen Transformationsmechanismus (40a, 77, 78, 110, 112) in einer von der besagten Gruppe von Scheiben (66) abweisenden Richtung vorspannt; und/oder wobei zumindest ein ausgabeseitiges Vorspannelement (71) zwischen dem besagten ausgabeseitigen Kupplungselement (47) und dem besagten ausgabeseitigen Transformationsmechanismus (40b, 69, 72) angeordnet ist und den besagten ausgabeseitigen Transformationsmechanismus (40b, 69, 72) in einer von der besagten Gruppe von Scheiben (66) abweisenden Richtung vorspannt, wobei vorzugsweise die gesamte Vorspannkraft des besagten ausgabeseitigen Vorspannelements (71) schwächer ist als die gesamte Vorspannkraft des besagten eingabeseitigen Vorspannelements (79).

3. Kupplung im Einklang mit Anspruch 1 oder 2, wobei das besagte eingabeseitige Kupplungselement (44) ein Kupplungsgehäuse (46) umfasst und/oder das besagte ausgabeseitige Kupplungselement (47) eine Kupplungsnabe (48) umfasst, die vorzugsweise in dem besagten Kupplungsgehäuse (46) angeordnet ist.

4. Kupplung im Einklang mit einem der Ansprüche 1 bis 3, wobei ein Kupplungsfreigabemechanismus (86) konfiguriert ist, um einen Presskontaktzustand der besagten Gruppe von Scheiben (66) durch eine extern aufgebrachte Kraft zwanghaft freizugeben.

5. Kupplung im Einklang mit einem der Ansprüche 1 bis 4, wobei in der axialen Richtung der eingabeseitige Transformationsmechanismus (40a, 77, 78, 110, 112) und der ausgabeseitige Transformationsmechanismus (40b, 69, 72) auf derselben Seite der Gruppe von Scheiben (66) angeordnet sind, und vorzugsweise der eingabeseitige Transformationsmechanismus (40a, 77, 78, 110, 112) weiter entfernt von der Gruppe von Scheiben (66) angeordnet ist als der ausgabeseitige Transformationsmechanismus (40b, 69, 72).

6. Kupplung im Einklang mit einem der Ansprüche 1 bis 4, wobei in der axialen Richtung der eingabeseitige Transformationsmechanismus (40a, 77, 78, 110, 112) und der ausgabeseitige Transformationsmechanismus (40b, 69, 71) auf gegenüberliegenden Seiten der Gruppe von Scheiben (66) angeordnet sind.

**7.** Kupplung im Einklang mit einem der Ansprüche 1 bis 6, wobei der eingabeseitige Transformationsmechanismus (40a, 77, 78, 110, 112) ein eingabeseitiges Drukkelement (77, 112) aufweist, das mit dem besagten eingabeseitigen Kupplungselement (44) drehbar ist und in axialer Richtung verschieblich ist, um die besagte Gruppe von Scheiben (66) direkt oder indirekt durch Bewegung in Richtung der besagten Gruppe von Scheiben (66) zu drücken, um dabei die besagte Gruppe von Scheiben (66) in einen Presskontaktzustand zu bringen; und/oder wobei der ausgabeseitige Transformationsmechanismus (40b, 69, 72) ein ausgabeseitiges Druckelement (69) umfasst, das mit dem besagten ausgabeseitigen Kupplungselement (47) drehbar ist und in axialer Richtung verschieblich ist, um die besagte Gruppe von Scheiben (66) direkt oder indirekt durch Bewegung in Richtung der besagten Gruppe von Scheiben (66) zu drücken, um dabei die besagte Gruppe von Scheiben (66) in einen Presskontaktzustand zu bringen.

**8.** Kupplung im Einklang mit Anspruch 7, wobei der eingabeseitige Transformationsmechanismus (40a, 77, 78, 110, 112) ferner ein eingabeseitiges Halteelement (78, 110) aufweist, das dem besagten eingabeseitigen Drukkelement (77, 112) zugewandt ist und gemeinsam mit dem besagten eingabeseitigen Druckelement (77, 112) einen Raum (82) bildet, dessen Breite sich verringert, wenn die Entfernung von der besagten Achsenlinie (AX) ansteigt, wobei das besagte eingabeseitige Halteelement (78, 110) in axialer Richtung an dem besagten eingabeseitigen Kupplungselement (44) fixiert ist oder in Richtung der besagten Gruppe von Scheiben (66) vorgespannt ist; und wobei vorzugsweise ein eingabeseitiger Druckkörper (40a) in dem Raum (82) zwischen dem eingabeseitigen Druckelement (77, 112) und dem besagten eingabeseitigen Halteelement (78, 110) angeordnet ist, um sich in einer von der besagten Achsenlinie (AX) abweisenden Richtung zu bewegen, um dabei das besagte eingabeseitige Drukkelement (77, 112) durch eine Zentrifugalkraft, die während der Drehung des eingabeseitigen Kupplungselements (66) erzeugt wird, in Richtung der besagten Gruppe von Scheiben (66) zu drücken.

**9.** Kupplung im Einklang mit Anspruch 7 oder 8, wobei der ausgabeseitige Transformationsmechanismus (40b, 69, 72) ferner ein ausgabeseitiges Halteelement (72) umfasst, das der besagten Gruppe von Scheiben (66) zugewandt ist und gemeinsam mit dem besagten ausgabeseitigen Druckelement (69) einen Raum (70) bildet, dessen Breite sich verringert, wenn der Abstand von der besagten Achsenlinie (AX) ansteigt, wobei das besagte ausgabeseitige Halteelement (72) in axialer Richtung an dem besagten ausgabeseitigen Kupplungselement (47) fixiert ist oder in Richtung der besagten Gruppe von Scheiben (66) vorgespannt ist; und wobei vorzugsweise ein ausgabeseitiger Druckkörper (40b) in dem Raum (70) zwischen dem besagten ausgabeseitigen Druckelement (69) und dem besagten ausgabeseitigen Halteelement (72) angeordnet ist, um sich in der von der besagten Achsenlinie (AX) abweisenden Richtung zu bewegen, um dabei das besagte ausgabeseitige Druckelement (69) durch eine Zentrifugalkraft, die während der Drehung des besagten ausgabeseitigen Kupplungselements (49) erzeugt wird, in Richtung der besagten Gruppe von Scheiben (66) zu drücken.

**10.** Kupplung im Einklang mit Anspruch 9, wobei die Drehgeschwindigkeit des besagten ausgabeseitigen Kupplungselements (47), bei welcher der besagte ausgabeseitige Druckkörper (40b) beginnt, sich in der Zentrifugalrichtung zu bewegen, geringer ist als diejenige des besagten eingabeseitigen Kupplungselements (44), bei welcher der besagte eingabeseitige Druckkörper (40a) beginnt, sich in der Zentrifugalrichtung zu bewegen.

**11.** Kupplung im Einklang mit einem der Ansprüche 7 bis 10, wobei das besagte eingabeseitige Druckelement (77, 112) und das besagte ausgabeseitige Druckelement (69) derart angeordnet sind, um die besagte Gruppe von Scheiben (66) aus derselben Richtung gegeneinander zu drücken.

**12.** Kupplung im Einklang mit einem der Ansprüche 7 bis 10, wobei das besagte eingabeseitige Druckelement (77, 112) und das besagte ausgabeseitige Druckelement (69) derart angeordnet sind, um die besagte Gruppe von Scheiben (66) aus entgegengesetzten Richtungen in der axialen Richtung gegeneinander zu drücken.

**13.** Kupplung im Einklang mit einem der Ansprüche 9 bis 12, wobei das besagte eingabeseitige Druckelement (77, 112) konfiguriert ist, um die besagte Gruppe von Scheiben (66) indirekt durch direktes oder indirektes Drücken des besagten ausgabeseitigen Halteelements zu drücken und um das besagte ausgabeseitige Halteelement (72) in Richtung der besagten Gruppe von Scheiben (66) vorzuspannen.

**14.** Kupplung im Einklang mit einem der Ansprüche 9 bis 13, wobei in der axialen Richtung der besagte eingabeseitige Druckkörper (40a) weiter entfernt von der besagten Gruppe von Scheiben (66) angeordnet ist als der besagte ausgabeseitige Druckkörper (40b); und/oder wobei in der Zentrifugalrichtung der besagte eingabeseitige Druckkörper (40) weiter entfernt von der besagten Achsenlinie (AX) angeordnet ist als der besagte ausgabeseitige Druckkörper (40b).

**15.** Fahrzeug, insbesondere Fahrzeug nach Spreizsitzbauart wie ein Motorrad, umfassend eine Kupplung im Einklang mit einem der Ansprüche 1 bis 14.

**Revendications**

**1.** Embrayage comprenant :

un élément d'embrayage côté entrée (44) apte à tourner autour d'une ligne axiale (AX), et au moins un disque d'embrayage côté entrée (64) apte à tourner avec ledit élément d'embrayage côté entrée (44) ;
un élément d'embrayage côté sortie (47) apte à tourner, séparément de l'élément d'embrayage côté entrée (44), autour de la ligne axiale (AX), et au moins un disque d'embrayage côté sortie (65) apte à tourner avec ledit élément d'embrayage de sortie (47), le disque d'embrayage côté sortie (65) faisant face au disque d'embrayage côté entrée (64) de manière à former un groupe de disques (66), et étant mobile dans le sens axial le long de la ligne axiale (AX) ;
un mécanisme de transformation côté entrée (40a, 77, 78, 110, 112) qui transforme la force centrifuge en force axiale le long de la ligne axiale (AX) en fonction de la vitesse de rotation de l'élément d'embrayage côté entrée (44), de manière à accoupler les disques (66),
**caractérisé par** un mécanisme de transformation côté sortie (40b, 69, 72) qui transforme la force centrifuge en force axiale le long de la ligne axiale (AX) en fonction de la vitesse de rotation de l'élément d'embrayage côté sortie (47), de manière à accoupler le groupe de disques (66).

**2.** Embrayage selon la revendication 1, étant précisé qu'au moins un élément de contrainte côté entrée (79) est disposé entre l'élément d'embrayage côté entrée (44) et le mécanisme de transformation côté entrée (40a, 77, 78, 110, 112) et contraint ce dernier pour l'éloigner du groupe de disques (66) ; et/ou au moins un élément de contrainte côté sortie (71) est disposé entre l'élément d'embrayage côté sortie (47) et le mécanisme de transformation côté sortie (40b, 69, 72) et contraint ce dernier pour l'éloigner du groupe de disques (66), étant précisé que de préférence la force de contrainte totale de l'élément de contrainte côté sortie (71) est plus faible que la force de contrainte totale de l'élément de contrainte côté entrée (79).

**3.** Embrayage selon la revendication 1 ou 2, étant précisé que l'élément d'embrayage côté entrée (44) comprend un carter d'embrayage (46) et/ou l'élément d'embrayage côté sortie (47) comprend un bossage d'embrayage (48) qui est de préférence disposé dans le carter d'embrayage (46).

**4.** Embrayage selon l'une des revendications 1 à 3, étant précisé qu'un mécanisme de débrayage (86) est conçu pour débloquer par force un état de contact de pression du groupe de disques (66) par une force appliquée de l'extérieur.

**5.** Embrayage selon l'une des revendications 1 à 4, étant précisé que dans le sens axial, le mécanisme de transformation côté entrée (40a, 77, 78, 110, 112) et le mécanisme de transformation côté sortie (40b, 69, 72) sont disposés sur le même côté du groupe de disques (66), et que de préférence le mécanisme de transformation côté entrée (40a, 77, 78, 110, 112) se trouve plus loin du groupe de disques (66) que le mécanisme de transformation côté sortie (40b, 69, 72).

**6.** Embrayage selon l'une des revendications 1 à 4, étant précisé que dans le sens axial, le mécanisme de transformation côté entrée (40a, 77, 78, 110, 112) et le mécanisme de transformation côté sortie (40b, 69, 71) sont disposés sur des côtés opposés du groupe de disques (66).

**7.** Embrayage selon l'une des revendications 1 à 6, étant précisé que le mécanisme de transformation côté entrée (40a, 77, 78, 110, 112) comprend un élément de pression côté entrée (77, 112) apte à tourner avec l'élément d'embrayage côté entrée (44) et mobile dans le sens axial de manière à presser le groupe de disques (66) directement ou indirectement en se déplaçant vers celui-ci, amenant ainsi ledit groupe de disques (66) dans un état de contact de pression ; et/ou que le mécanisme de transformation côté sortie (40b, 69, 72) comprend un élément de pression côté sortie (69) apte à tourner avec l'élément d'embrayage côté sortie (47) et mobile dans le sens axial de manière à presser le groupe de disques (66) directement ou indirectement en se déplaçant vers celui-ci, amenant ainsi ledit groupe de disques (66) dans un état de contact de pression.

**8.** Embrayage selon la revendication 7, étant précisé que le mécanisme de transformation côté entrée (40a, 77, 78, 110, 112) comprend par ailleurs un élément de retenue côté entrée (78, 110) qui fait face à l'élément de pression côté entrée (77, 112) et qui forme avec l'élément de pression côté entrée (77, 112) un espace (82) dont la largeur va en diminuant au fur et à mesure que la distance par rapport à la ligne axiale (AX) augmente, ledit élément de retenue côté entrée (78, 110) étant fixé dans le sens axial à l'élément d'embrayage côté entrée (44) ou étant contraint vers le groupe de disques (66) ; et que de préférence un corps de pression côté entrée (40a) est disposé dans l'espace (82) entre l'élément de pression côté entrée (77, 112) et l'élément de retenue côté entrée (78, 110) de manière à se déplacer à l'opposé de la ligne axiale (AX), pressant ainsi l'élément de pression côté entrée (77, 112) vers le groupe de disques (66) grâce à la force centrifuge produite pendant la rotation de l'élément d'embrayage côté entrée (44).

9. Embrayage selon la revendication 7 ou 8, étant précisé que le mécanisme de transformation côté sortie (40b, 69, 72) comprend par ailleurs un élément de retenue côté sortie (72) qui fait face au groupe de disques (66) et qui forme avec l'élément de pression côté sortie (69) un espace (70) dont la largeur va en diminuant au fur et à mesure que la distance par rapport à la ligne axiale (AX) augmente, l'élément de retenue côté sortie (72) étant fixé dans le sens axial à l'élément d'embrayage de sortie (47) ou étant contraint vers le groupe de disques (66) ; et que de préférence un corps de pression côté sortie (40b) est disposé dans l'espace (70) entre l'élément de pression côté sortie (69) et l'élément de retenue côté sortie (72) de manière à se déplacer à l'opposé de la ligne axiale (AX) , pressant ainsi l'élément de pression côté sortie (69) vers le groupe de disques (66) grâce à la force centrifuge produite pendant la rotation de l'élément d'embrayage côté sortie (49).

10. Embrayage selon la revendication 9, étant précisé que la vitesse de rotation de l'élément d'embrayage côté sortie (47) à laquelle le corps de pression côté sortie (40b) commence à se déplacer dans le sens centrifuge est inférieure à celle de l'élément d'embrayage côté entrée (44) à laquelle le corps de pression côté entrée (40a) commande à se déplacer dans le sens centrifuge.

11. Embrayage selon l'une des revendications 7 à 10, étant précisé que l'élément de pression côté entrée (77, 112) et l'élément de pression côté sortie (69) sont disposés de manière à presser le groupe de disques (66) l'un vers l'autre à partir de la même direction.

12. Embrayage selon l'une des revendications 7 à 10, étant précisé que l'élément de pression côté entrée (77, 112) et l'élément de pression côté sortie (69) sont disposés de manière à presser le groupe de disques (66) l'un vers l'autre à partir de directions opposés dans le sens axial.

13. Embrayage selon l'une des revendications 9 à 12, étant précisé que l'élément de pression côté entrée (77, 112) est conçu pour presser le groupe de disques (66) indirectement en pressant l'élément de retenue côté sortie (72) directement ou indirectement et en contraignant ce dernier vers le groupe de disques (66).

14. Embrayage selon l'une des revendications 9 à 13, étant précisé que dans le sens axial, le corps de pression côté entrée (40a) se trouve plus loin du groupe de disques (66) que le corps de pression côté sortie (40b) ; et/ou que dans le sens centrifuge, le corps de pression côté entrée (40a) se trouve plus loin de la ligne axiale (AX) que le corps de pression côté sortie (40b).

15. véhicule, en particulier véhicule du type à enfourcher tel qu'un motocycle, comprenant un embrayage selon l'une des revendications 1 à 14.

[Fig.1]

[Fig.2]

[Fig.3]

[Fig.4]

[Fig.5]

[Fig.6]

85

[Fig.7]

[Fig.8]

[Fig.9]

[Fig.10]

[Fig.11]

[Fig.12]

[Fig.13]

[Fig.14]

[Fig.15]

[Fig.16]

[Fig.17]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1772642 A1
- WO 2005083284 A1

- JP 2005207515 A